# EUROPEAN PATENT APPLICATION

(11) **EP 2 540 756 A1**
(43) Date of publication of application: **02.01.2013**
(21) Application number: 11747505.3
(22) Date of filing: 25.02.2011
(51) Int. Cl.: C08G 61/00

(54) **METHOD FOR PRODUCING POLYMER COMPOUND**

(30) Priority: 25.02.2010 JP 2010039923
(71) Applicant: Sumitomo Chemical Co., Ltd, Chuo-ku, Tokyo 104-8260 (JP)
(72) Inventor: GOTO, Osamu, Tsukuba-shi Ibaraki 305-0821 (JP); FUKUSHIMA, Daisuke, Ushiku-shi Ibaraki 300-1206 (JP); NAKATANI, Tomoya, Tsukuba-shi Ibaraki 305-0821 (JP)
(74) Representative: Duckworth, Timothy John
(86) International application number: PCT/JP2011/054283
(87) International publication number: WO 2011/105549

(57) **Abstract**

The problem to be solved of the present invention is to provide a method for producing a polymer compound having an increased molecular weight through a short-time polymerization process. Means for solving the problem is a method for producing a polymer compound having a repeating unit represented by formula (2), which method comprising a step of polymerizing a first aromatic compound having at least two first functional groups each containing a boron atom with a second aromatic compound having at least two second functional groups which are capable of reacting with the first functional group, in the presence of an organic solvent, a palladium complex, a base and a compound represented by formula (1): 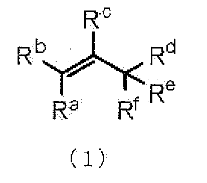 wherein R^{a}, R^{b}, R^{c}, R^{d}, R^{e} and R^{f} are the same or different, and each represents a hydrogen atom or a monovalent organic group, or any two of R^{a} to R^{f} are bound with each other to form a non-aromatic ring, and the remainder are the same or different, and each represents a hydrogen atom or a monovalent organic group;

-Ar- (2)

wherein Ar represents a divalent group resulting from the removal of two hydrogen atoms from an aromatic compound.

## Description

### TECHNICAL FIELD

The present invention relates to a method for producing a polymer compound by a condensation polymerization.

### BACKGROUND ART

There have been considered various methods as methods for producing a polymer compound comprising an arylene group or a hetroarylene group as a repeating unit. For example, it is proposed a method for producing a polymer compound by reacting an aromatic compound having two functional groups each comprising a boron atom with an aromatic compound comprising two bromo groups in the presence of a palladium complex, a base and an organic solvent through the Suzuki coupling reaction (non-patent document 1).

### BACKGROUND DOCUMENTS

### NON-PATENT DOCUMENTS

Non-Patent Document 1: Polymer, vol. 38, P. 1221-1226 (1997)

### DISCLOSURE OF THE INVENTION

### PROBLEMS TO BE SOLVED BY THE INVENTION

However, the above method for producing a polymer compound has been accompanied by a problem that the molecular weight of the polymer compound obtained by the polymerization performed within a short time is not sufficiently high.

It is an object of the present invention to provide a method for producing a polymer compound that has an increased molecular weight through a short time polymerization process.

### MEANS FOR SOLVING THE PROBLEM

Therefore, first, the present invention provides a method for producing a polymer compound having a repeating unit represented by formula (2), comprising a step of polymerizing a first aromatic compound having at least two first functional groups each containing a boron atom with a second aromatic compound having at least two second functional groups which are capable of reacting with the first functional group, in the presence of an organic solvent, a palladium complex, a base and a compound represented by formula (1):

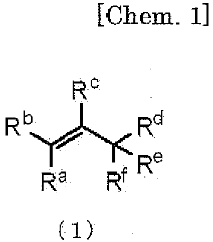

wherein, R^{a}, R^{b}, R^{c}, R^{d}, R^{e} and R^{f} are the same or different, and each represents a hydrogen atom or a monovalent organic group, or any two of R^{a} to R^{f} are bound with each other to form a non-aromatic ring, and the remainder are the same or different, and each represents a hydrogen atom or a monovalent organic group;

[Chem. 2]

- Ar - (2)

wherein, Ar represents a divalent group resulting from the removal of two hydrogen atoms from an aromatic compound.

Second, the present invention provides a method for producing a polymer compound having a repeating unit represented by formula (2), comprising a step of polymerizing an aromatic compound having a first functional group containing a boron atom and a second functional group which is capable of reacting with the first functional group in the presence of an organic solvent, a palladium complex, a base and a compound represented by formula (1):

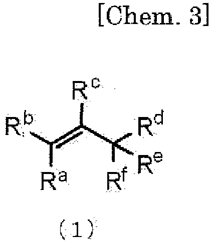

wherein, R^{a}, R^{b}, R^{c}, R^{d}, R^{e} and R^{f} are the same or different, and each represents a hydrogen atom or a monovalent organic group, or any two of R^{a} to R^{f} are bound with each other to form a non-aromatic ring, and the remainder are the same or different, and each represents a hydrogen atom or a monovalent organic group;

[Chem. 4]

- Ar - (2)

wherein Ar represents a divalent group resulting from the removal of two hydrogen atoms from an aromatic compound.

### EFFECTS OF THE INVENTION

When the production method of the present invention is used, a polymer compound having a high molecular weight can be produced within a short time, so that the present invention is industrially significantly useful. When a polymerization is performed in the presence of the compound represented by formula (1), the palladium complex is stabilized with the double bond site or with the allyl site of the compound, and the effect as mentioned above seems to be developed.

### EMBODIMENT FOR CARRYING OUT THE INVENTION

The present invention will be explained in detail hereinafter.

The first embodiment of the production method of a polymer compound of the present invention resides in a polymerization method of a polymer compound having a repeating unit represented by formula (2) by polymerizing a first aromatic compound having at least two first functional groups each containing a boron atom with a second aromatic compound having at least two second functional groups, each of which is capable of reacting with the first functional group, in the presence of an organic solvent, a palladium complex, a base and a compound represented by formula (1).

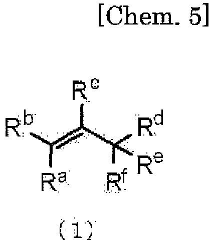

In the above formula, R^{a}, R^{b}, R^{c}, R^{d}, R^{e} and R^{f} are the same or different, and each represents a hydrogen atom or a monovalent organic group, or any two of R^{a} to R^{f} are bound with each other to form a non-aromatic ring, and the remainder are the same or different, and each represents a hydrogen atom or a monovalent organic group.

The monovalent organic group includes a halogen group, an alkyl group, an alkenyl group, an alkynyl group, an alkoxy group, an alkylthio group, an aryl group, an aryloxy group, an arylthio group, an arylalkyl group, an arylalkoxy group, an arylalkylthio group, an arylalkenyl group, an arylalkynyl group, a monovalent heterocyclic group, a heterocyclic thio group, an amino group, a silyl group, an acyl group, an acyloxy group, an imine residue, an amide group, an acid imide group, a carboxyl group, a cyano group, a nitro group and the like.

The non-aromatic ring means a ring that is not an aromatic ring.

For example, in the compound represented by formula (1), the phrase "R^{b} and R^{c} are bound with each other to form a non-aromatic ring" means that R^{b} and R^{c} are bound with each other to form a ring that is not an aromatic ring.

The compound represented by formula (1) may be liquid or solid at normal temperature. When the compound is liquid at normal temperature, it is preferably miscible with the organic solvent, water and the like, which are used for the present production method. When the compound is solid at normal temperature, it preferably dissolves in the organic solvent, water and the like, which are used for the present production method.

The compound represented by formula (1) includes a compound having an acyclic olefin structure, a compound having a cyclic olefin structure and the like.

The acyclic olefin structure may have a double bond.

The cyclic olefin structure may have a double bond. In addition, the cyclic olefin structure may have a fused ring structure obtained by further fusing the rings or a crosslinked structure.

The compound represented by formula (1) having an acyclic olefin structure may have a linear structure or a branched structure. The double bond may be located terminally or internally within the chain.

The internal double bond in the chain may be cis type or trans type. Specific examples of the above compound include 1-propene, 1-butene, 1-pentene, 1-hexene, 1-heptene, 1-octene, 1-nonene, 1-decene, 1-undecene, 1-dodecene, 1-pentadecene, 2-butene, 2-pentene, 2-hexene, 2-heptene, 2-octene, 2-nonene, 2-decene, 2-undecene, 2-dodecene, 2-pentadecene, 3-hexene, 3-heptene, 3-octene, 3-nonene, 3-decene, 3-undecene, 3-dodecene, 3-pentadecene, 2-methyl-1-pentene, 2-methyl-2-pentene, 3-methyl-1-pentene, 3-methyl-2-pentene, 4-methyl-1-pentene, 4-methyl-2-pentene, 2-methyl-1-hexene, 4-methyl-1-hexene, 2-methyl-1-heptene, 2-methyl-2-heptene, allyl cyclopentane, allyl cyclohexane, camphene (Camphene) and the like.

As the above compound, a compound having a boiling point of not less than 40 °C at an atmospheric pressure (1 atm) is preferable, and 1-hexene, 1-heptene, 1-octene, 1-nonene, 1-decene, 1-undecene, 1-dodecene or 1-pentadecene is more preferable.

The compound represented by formula (1) having an acyclic olefin structure may have two or more double bonds. Specific examples of the compound having two or more double bonds include 1,3-pentadiene, 1,4-pentadiene, 1,3- hexadiene, 1,4- hexadiene, 1,5- hexadiene, 1,3-heptadiene, 1,4-heptadiene, 1,5-heptadiene, 1,6-heptadiene, 1,3-octadiene, 1,4-octadiene, 1,5-octadiene, 1,6-octadiene, 1,7-octadiene, 2,3-dimethyl-1,3-butadiene and the like.

As the above compound, a compound having a boiling point of not less than 40 °C at an atmospheric pressure (1 atm) is preferable, and 1,3-hexadiene, 1,4- hexadiene, 1,5- hexadiene, 1,3-heptadiene, 1,4-heptadiene, 1,5-heptadiene, 1,6-heptadiene, 1,3-octadiene, 1,4-octadiene, 1,5-octadiene, 1,6-octadiene or 1,7-octadiene is more preferable.

The compound represented by formula (1) having an acyclic olefin structure may comprise a functional group other than an alkyl group. Specific examples of the compound having such a functional group include 2-propen-1-ol, 3-buten-1-ol, 4-penten-1-ol, 5-hexen-1-ol, 6-hepten-1-ol, 7-octen-1-ol, methyl 3-pentenoate, methyl 4-pentenoate, methyl 6-heptenoate and the like.

Specific examples of the compound represented by formula (1) having a cyclic olefin structure include cyclopropene, cyclobutene, cyclopentene, cyclohexene, cycloheptene, cyclooctene, cyclononene, cyclodecene, cyclononene, cyclodecene, cyclododecene, cyclopentadene and the like. As the above compound, a compound having a boiling point of not less than 40 °C at an atmospheric pressure (1 atm) is preferable, and cyclohexene, cycloheptene, cyclooctene, cyclononene, cyclodecene, cyclododecene or cyclopentadecene is more preferable.

The compound represented by formula (1) having cyclic olefin structure may have two or more double bonds. Specific examples of the compound having two or more double bonds include 1,3-cyclohexadiene, 1,4-cyclohexadiene, 1,3-cycloheptadiene, 1,3-cyclooctadiene, 1,5-cyclooctadiene, 1,9-cyclohexadecadiene, 1,5,9-cyclododecatriene, α-caryophyllene (α-Caryophyllene) and the like.

The compound represented by formula (1) having cyclic olefin structure may have two or more rings. Specifically, it may have a fused ring structure obtained by further fusing one or more rings with a cyclic olefin structure or a crosslinked structure.

The cyclic olefin structure having a crosslinked structure includes norbornene structure or norbornadiene structure. The compound having the norbornene structure includes norbornene, 5-norbornen-2-ol, 5-norbornene-2-methanol, 5-norbornene-2,2--dimethanol, 5-norbornene-2,3-dimethanol, 5-norbornene-2-aldehyde, 5-norbornene-2-carbonitrile, 5-norbornene-2-carboxylic acid, 5-norbornene-2,3-dicarboxylic acid, 5-norbornene-2,3-dicarboxylic acid anhydride, 5-norbornen-2-yl acetate, 5-norbornene-2,3-diyl diacetate, 5-vinyl-2-norbornene, dicyclopentadiene and the like, and the compound having the norbornadiene structure includes 2,5-norbornadiene, 7-tert-butoxy-2,5-norbornadiene and the like.

The compound having a fused ring structure obtained by further fusing a ring with a cyclic olefin structure includes tetrahydroindene, 2-carene, 3-carene and the like.

The compound represented by formula (1) may have an optically asymmetric carbon atom. Specific examples of the compound represented by formula (1) having an optically asymmetric carbon atom include (R)-(+)-limonene, (S)-(-)-limonene, (1R)-(+)-α-pinene, (1S)-(-)-α-pinene, β-caryophyllene (β-Caryophyllene), (-)-α-cedrene (Cedrene), (+)-ß-cedrene (Cedrene) and the like.

The compound represented by formula (1) may have an aryl group. Specific examples of the compound represented by formula (1) having an aryl group include allyl benzene, indene, 2-methyl indene, 2-phenyl propene, 1-phenyl-1-propene, α-methyl stilbene, 4-phenyl-1-butene, 2-methyl-1-phenyl-1-propene, 2-isopropenyl toluene, 4-isopropenyl toluene, 2-isopropenyl naphthalene, 2,4-diphenyl-4-methyl-1-pentene and the like.

The compound represented by formula (1) may have an aryl group having a functional group. Specific examples of the compound represented by formula (1) having an aryl group having a functional group include 2-aryl phenol, 2-methyl-3-phenyl-2-propen-1-ol, 4-aryl anisole, aryl benzyl ether, 2-aryl-6-methyl phenol, 4-propenyl anisole, aryl-pentafluorobenzene and the like.

In the compound represented by formula (1), it is preferable that R^{d} is a hydrogen atom from the viewpoint that the polymer compound having a high molecular weight is produced by polymerization in a short time.

In the compound represented by formula (1), it is preferable that R^{a} and R^{b} are each hydrogen atoms from the viewpoint that the polymer compound having a high molecular weight is produced by polymerization in a short time.

In the compound represented by formula (1), it is more preferable that R^{a}, R^{b} and R^{d} are each hydrogen atoms.

It is preferable that the compound represented by formula (1) is a hydrocarbon compound or a compound composed of carbon atoms, hydrogen atoms and oxygen atoms from the viewpoint that a polymer compound is produced at low cost.

It is more preferable that the compound represented by formula (1) is a hydrocarbon compound.

It is preferable that the compound represented by formula (1) is an aliphatic compound from the viewpoint that a polymer compound is produced at low cost.

It is preferable that, in the compound represented by formula (I), R^{a}, R^{b}, R^{c}, R^{d} and R^{f} are each hydrogen atoms and R^{e} is an alkyl group having 3 to 12 carbon atoms from the viewpoint that a polymer compound is produced at low cost. Specifically, such a compound includes 1-hexene, 1-heptene, 1-octene, 1-nonene, 1-decene, 1-undecene, 1-dodecene, 1-pentadecene and the like.

It is preferable that the compound represented by formula (1) is the compound represented by formula (15). Specific examples of the compound represented by formula (15) include substituted or unsubstituted 1-cyclohexene, substituted or unsubstituted norbornene, limonene, pinene and the like.

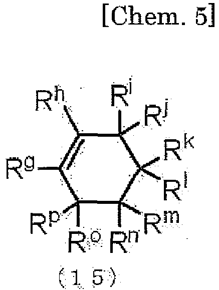

In the above formula, R^{g} to R^{p} are the same or different, and each represents a hydrogen atom or an aliphatic hydrocarbon group.

It is preferable that the amount of use of the compound represented by formula (1) in the production method of the present invention is from 0.1 to 1000 mol based on 1 mol of palladium complex used as the catalyst. The amount from 0.5 to 500 mol is more preferable, and the amount from 1 to 250 mol is further more preferable.

It is preferable that the amount of use of the compound represented by formula (1) in the production method of the present invention is from 0.5 to 1000 mol based on 1 mol of phosphine compound in the palladium complex or phosphine compound used as a ligand. The amount from 0.5 to 500 mol is more preferable, and the amount from 1 to 250 mol is further more preferable.

It is preferable that the amount of use of the compound represented by formula (1) in the production method in the present invention is from 0.0001 to 20 mol based on 1 mol of the total of the first aromatic compound and the second aromatic compound. The amount from 0.0005 to 20 mol is more preferable, and the amount from 0.001 to 10 mol is further more preferable. When the amount of use of the compound represented by formula (1) is less than 0.0001 mol based on 1 mol of the total of the first aromatic compound and the second aromatic compound, the increasing effect of the molecular weight of the polymer compound could not be attained and when the amount of use exceeds 20 mol, no improved effect is recognized.

In a particularly preferred embodiment, the amount of use of the compound represented by formula (1) is from 0.01 to 1 mol, preferably from 0.03 to 0.5 mol, and more preferably from 0.05 to 0.3 mol based on 1 mol of the total of the first aromatic compound and the second aromatic compound.

When the compound represented by formula (1) is liquid at normal temperature, the compound may also be used as a reaction solvent. When the compound represented by formula (1) is used as the reaction solvent, it may be used by being mixed with an organic solvent.

The compound represented by formula (1) which is liquid at normal temperature is preferably has a boiling point of not less than 40°C at an atmospheric pressure (1 atm), which may be higher or lower than the reaction temperature.

When the boiling point of the compound represented by formula (1) is lower than the reaction temperature of the polymerization reaction, it is preferable that the difference of the boiling point and the reaction temperature is within 80°C, and more preferably within 60°C.

When the boiling point of the compound represented by formula (1) is higher than the reaction temperature of the polymerization reaction, it is preferable that the difference of the boiling point and the reaction temperature is within 200°C, and more preferably within 150°C.

The first functional group containing a boron atom in the first aromatic compound includes a group having a boronic acid structure represented by -B(OH)₂, -B(OR²⁶)(OR²⁷), a group having a boronic ester structure represented by formula (B-1), a group having a borane structure represented by the formula -BR²⁹R³⁰ and the like, a group having a diazaborane structure represented by formula (B-2). R²⁶ is an alkyl group having 1 to 6 carbon atoms, which alkyl group may have a substituent. R²⁷ is an alkyl group having 1 to 6 carbon atoms, which alkyl group may have a substituent. R²⁸ is a divalent hydrocarbon group, which forms a five-membered or a six-membered ester ring structure together with the boron atom in formula (A) and two oxygen atoms. The above divalent hydrocarbon group may comprise a substituent. As R²⁸, an alkylene group having 2 or 3 carbon atoms, ortho- or meta-phenylene group is preferable. Such alkylene group and phenylene group may comprise a substituent. R²⁹ and R³⁰ are the same or different, and each represents an alkyl group having 1 to 6 carbon atoms, wherein the alkyl group may comprise a substituent. R³¹ is a divalent hydrocarbon group, and the divalent hydrocarbon group may comprise a substituent.

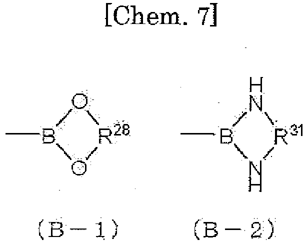

The group having a boronic ester structure includes the group formed by esterification of an alcohol such as methanol, ethanol, n-propanol, isopropanol, n-butanol, tert-butanol, i-butyl alcohol, sec-butyl alcohol, tert-butyl alcohol, n-pentyl alcohol, neopentyl alcohol, cyclopentyl alcohol, n-hexyl alcohol, cyclohexyl alcohol, ethylene glycol, pinacol, propanediol, 2,2-dimethyl-1,3-propanediol, 2-methyl-2,4-pentanediol, 2,4-dimethyl-2,4-pentanediol or 1,2-dihydroxybenzene with a boronic acid, and preferably includes the group formed by esterification of an alcohol such as methanol, ethanol, ethylene glycol, pinacol, propanediol, 2,2-dimethyl-1,3-propanediol, 2-methyl-2,4-pentanediol, 2,4-dimethyl-2,4-pentanediol or 1,2-dihydroxybenzene with a corresponding boronic acid.

The group having a boronic ester structure includes the group represented by the formulae as shown below:

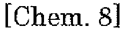

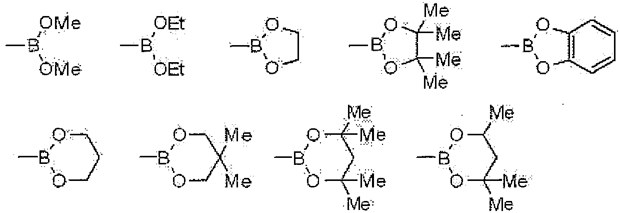

In the above formulae, Me represents a methyl group, Et represents an ethyl group.

The group represented by formula (B-2) includes a group formed by dehydration reaction of a diamine compound with a boronic acid, such as a group having a diazaborole structure or a diazaborile structure.

The group having a diazaborole structure or a diazaboryl structure includes the group represented by the formula as shown below:

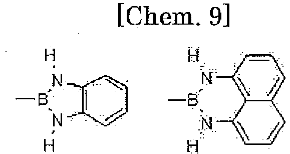

The second functional group in the second aromatic compound includes a halogen group such as Cl, Br or I, a group containing a sulfonate ester structure such as triflate (CF₃SO₃-), mesylate (CH₃SO₃⁻), tosylate (CH₃C₆H₄SO₃-) and the like.

It is preferable that the "first functional group containing a boron atom" and the "second functional group" in the present invention become a combination of the functional groups that form a Carbon-Carbon bond via the Suzuki coupling reaction.

As the first aromatic compound to be used for the production method in the present invention, at least one compound selected from the group consisting of compounds represented by formulae (3) to (6) is preferable. Then, as the second aromatic compound, at least one compound selected from the group consisting of compounds represented by formulae (7) to (10) is preferable.

[Chem. 10]

W¹-A-W¹ (3)

W¹-B-W¹ (4)

W¹-C-W¹ (5)

W¹-D-W¹ (6)

W²-A-W² (7)

W²-B-W² (8)

W²-C-W² (9)

W²-D-W² (10)

In the above formulae, W¹ represents the first functional group containing a boron atom, W² represents the second functional group, A represents an arylene group, B represents a divalent heterocyclic residue having aromaticity, C represents a divalent aromatic amine residue, D represents a divalent group resulting from the removal of two hydrogen atoms from a compound in which two aromatic rings are bound via a hydrocarbon group or a hetero atom.

As the first aromatic compound or the second aromatic compound, several kinds of compounds can be used in combination. For example, as the second aromatic compound, the compound represented by formula (9) and the compound represented by formula (10) may be combined to be used.

The arylene group refers to a group of atoms left after two hydrogen atoms which bond to carbon atoms constituting an aromatic ring are removed from an aromatic hydrocarbon compound, and means unsubstituted arylene group and substituted arylene group. The arylene group includes a group having a benzene ring, a group having a fused ring, a group in which two or more independent benzene rings or fused rings are bound via a single bond or divalent organic group and the like. As the substituent in the substituted arylene group, without being particularly limited, it is preferable that the substituent is a halogen group, an alkyl group, an alkenyl group, an alkynyl group, an alkoxy group, an alkylthio group, an aryl group, an aryloxy group, an arylthio group, an arylalkyl group, an arylalkoxy group, an arylalkylthio group, an arylalkenyl group, an arylalkynyl group, a monovalent heterocyclic group, a heterocyclic thio group, an amino group, a silyl group, an acyl group, an acyloxy group, an imine residue, an amide group, an acid imide group, a carboxyl group, a cyano group, a nitro group and the like from the viewpoints of the solubility of the polymer compound, the easiness of the synthesis of the polymer compound and the like.

The number of carbon atoms of the part of the arylene group excluding the substituent is normally around 6 to 60, preferably 6 to 40, more preferably 6 to 20. The total number of carbon atoms of the arylene group including the substituent is normally around 6 to 100, preferably 6 to 80, more preferably 6 to 70.

The arylene group includes, for example, a phenylene group (such as represented by the following formulae Ph-1 to Ph-3), a naphthalene-diyl group (such as represented by the following formulae Naph-1 to Naph-10), an anthracene-diyl group (such as represented by the following formulae Anth-1 to Anth-12), a biphenyl-diyl group (such as represented by the following formulae BP-1 to BP-6), a terphenyl-diyl group (such as represented by the following formulae TP-1 to TP-7), a fluorene-diyl group (such as represented by the following formulae Flu-1 to Flu-10), a benzofluorene-diyl group (such as represented by the following formulae BFlu-1 to BFlu-34), and the other divalent fused polycyclic aromatic hydrocarbon groups (such as represented by the following formulae HC-1 to HC-19).

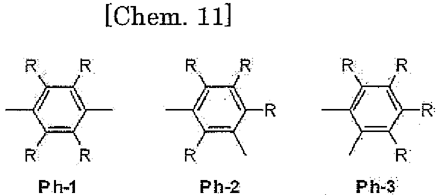

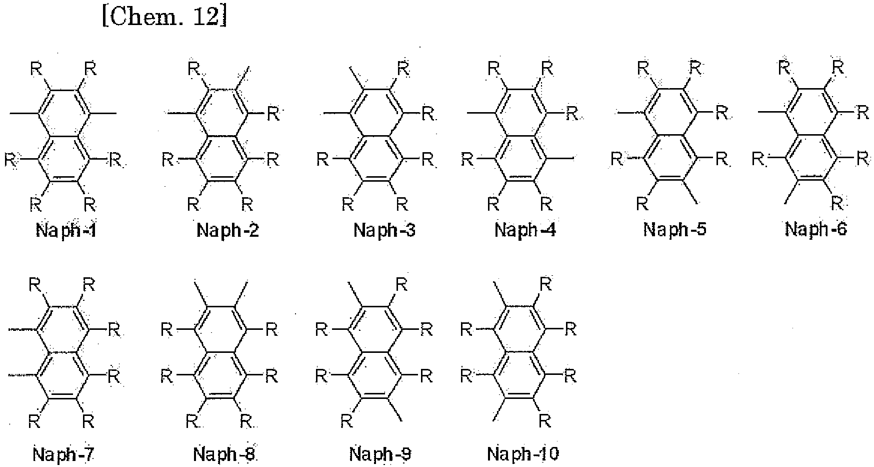

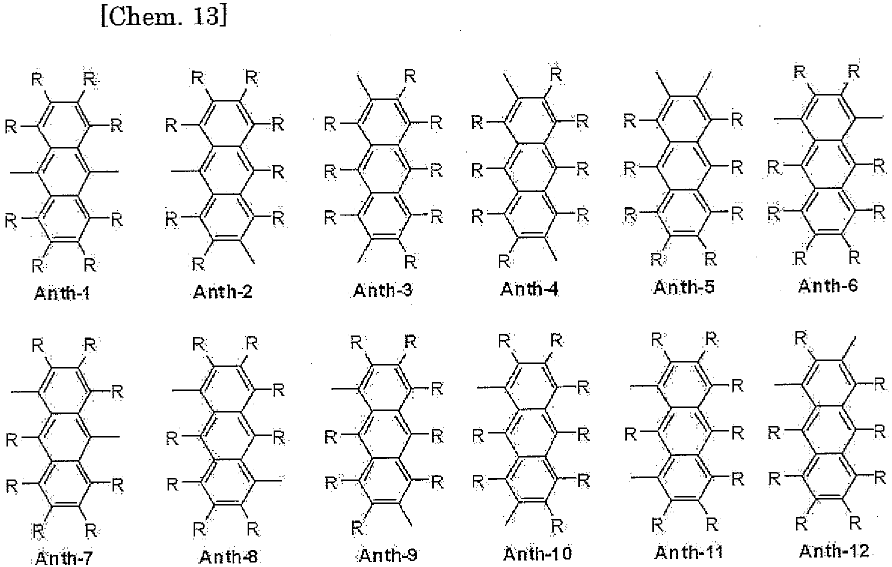

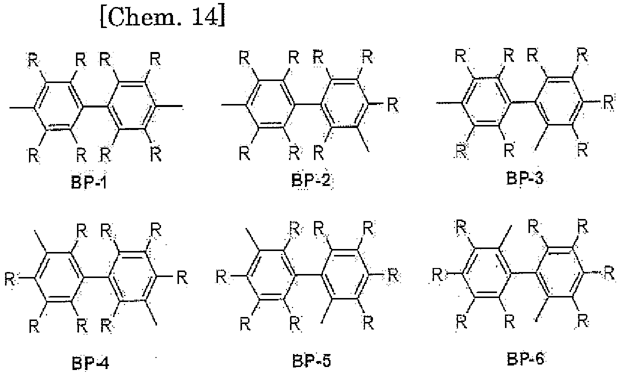

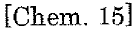

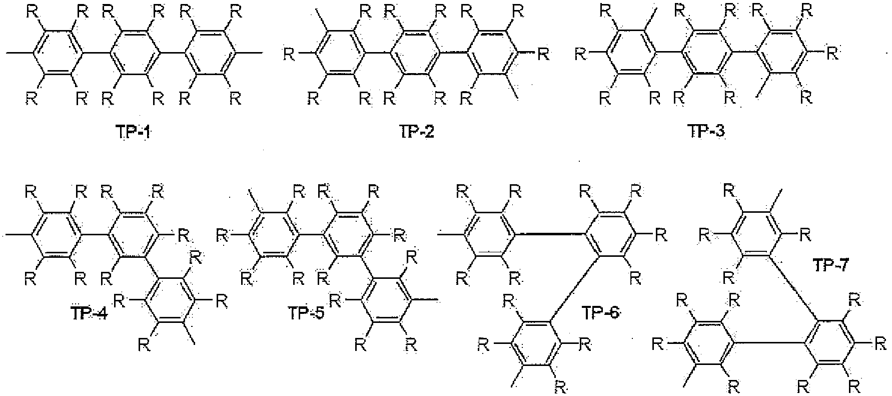

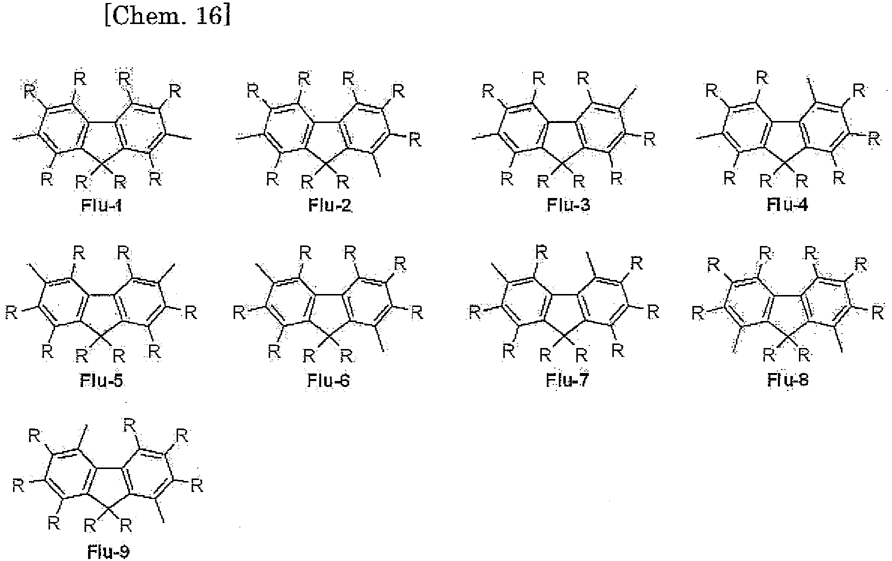

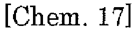

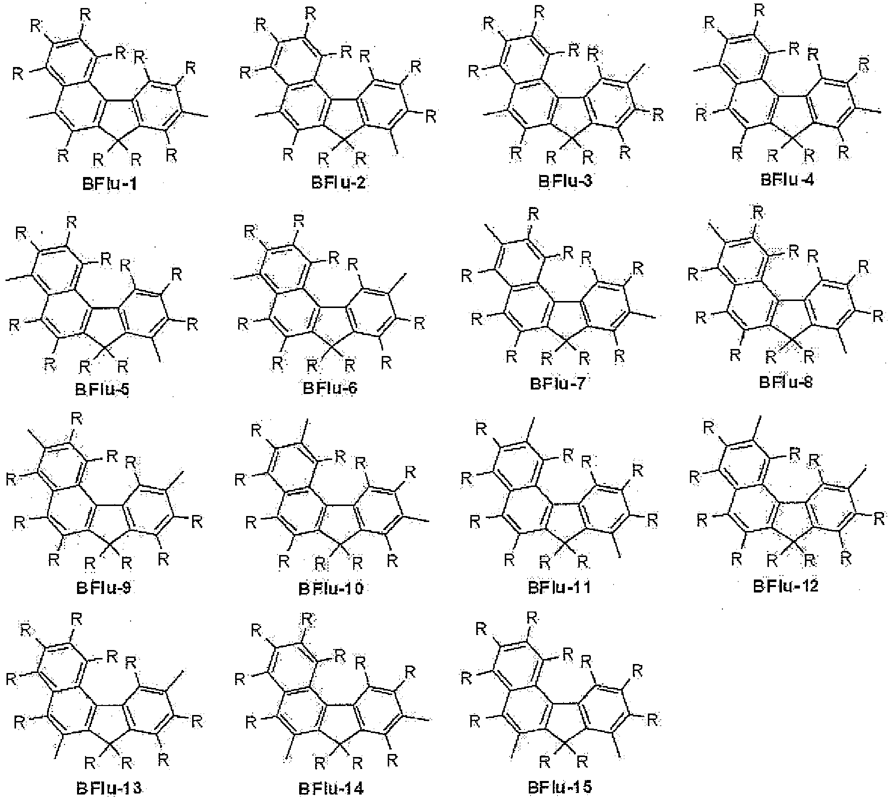

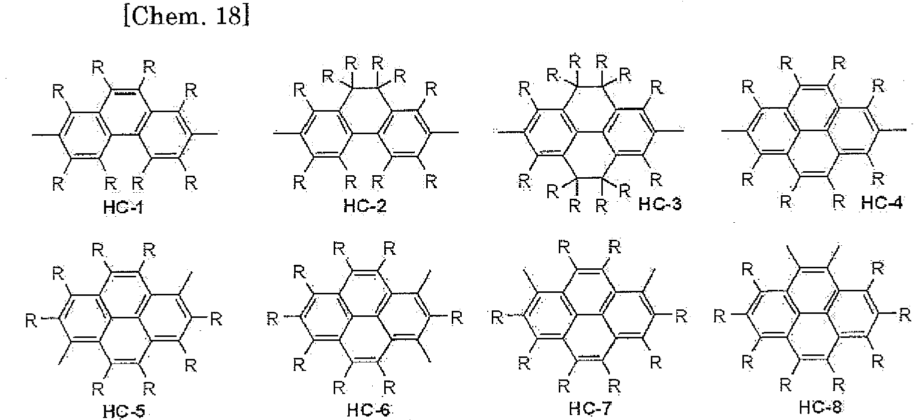

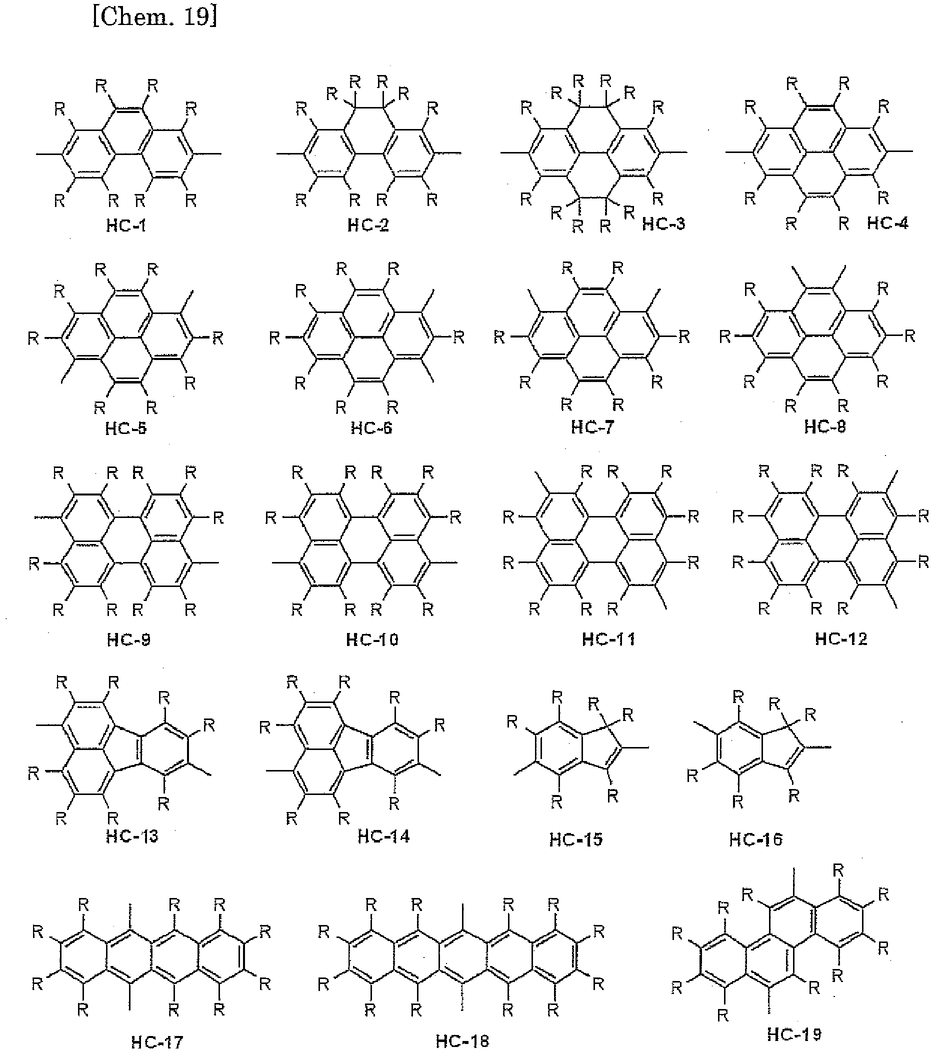

In the above formulae, R represents a hydrogen atom, a halogen atom, an alkyl group, an alkoxy group, an alkylthio group, an aryl group, an aryloxy group, an arylthio group, an arylalkyl group, an arylalkoxy group, an arylalkylthio group, an arylalkenyl group, an arylalkynyl group, a monovalent heterocyclic group, a heterocyclic thio group, an amino group, a silyl group, an acyl group, an acyloxy group, an imine residue, an amide group, an acid imide group, a carboxyl group, a cyano group or a nitro group.

The divalent heterocyclic residue having aromaticity refers to a group of atoms left after two hydrogen atoms are removed from a divalent heterocyclic compound having aromaticity, which group may have a substituent. The heterocyclic compound having aromaticity refers to a compound which has an organic compound having a cyclic structure and which has, as the element constituting the ring, not only a carbon atom but also a hetero atom such as oxygen, sulfur, nitrogen, phosphor, boron, arsenic and the like.

The substituent includes an alkyl group, an alkoxy group, an alkylthio group, an aryl group, an aryloxy group, an arylthio group, an arylalkyl group, an arylalkoxy group, an arylalkylthio group, an arylalkenyl group, an arylalkynyl group, an amino group, a substituted amino group, a silyl group, a substituted silyl group, a halogen atom, an acyl group, an acyloxy group, an imine residue, an amide group, an acid imide group, a monovalent heterocyclic group, a carboxyl group, a substituted carboxyl group, a cyano group and the like.

The number of carbon atoms of a part of the divalent heterocyclic residue having aromaticity excluding the substituent is normally around 3 to 60. The total number of carbon atoms of the divalent heterocyclic residue having aromaticity including the substituent is normally around 3 to 100.

Examples of the divalent heterocyclic residue having aromaticity include the following compounds, for example, a divalent heterocyclic residue containing nitrogen as the hetero atom; a pyridine-diyl group (such as represented by the following formulae Py-1 to Py-6), a diazaphenylene group (such as represented by the following formulae Py-7 to Py12), a quinoline-diyl group (such as represented by the following formulae Quin-1 to Quin-20), a quinoxaline-diyl group (such as represented by the following formulae Quin-51 to Quin-58), an acridine-diyl group (such as represented by the following formulae Acri-1 to Acri-17), a phenanthroline-diyl group (such as represented by the following formulae Phen-1 to Phen-4), a bipyridine-diyl group (such as represented by the following formulae BPY-1-BPY-21), a residue having a fluorene structure containing silicon, nitrogen, sulfur, selenium or the like as the hetero atom (such as represented by the following formulae HeFlu-1 to HeFlu-15), a five-membered ring heterocyclic residue containing silicon, nitrogen, sulfur, selenium or the like as the hetero atom (such as represented by the following formulae Hetero-1 to Hetero-5), a five-membered ring fused heterocyclic residue containing silicon, nitrogen, sulfur, selenium or the like as the hetero atom (such as represented by the following formulae Hetero-6 to Hetero-27), a five-membered ring heterocyclic residue containing silicon, nitrogen, sulfur, selenium or the like as a hetero atom, which is bound at the α-position of the hetero atom to form a dimer or an oligorner (such as represented by the following formulae Hetero-28 to Hetero-31), a five-membered ring heterocyclic residue containing silicon, nitrogen, sulfur, selenium or the like as a hetero atom, which is bound to a phenyl group at the α-position of the hetero atom (such as represented by the following formulae Hetero-32 to Hetero-38), a group wherein a five-membered ring heterocyclic group containing oxygen, nitrogen, sulfur or the like as a hetero atom which is substituted by a phenyl group, a furyl group or a thienyl group (such as represented by the following formulae Hetero-39 to Hetero-48).

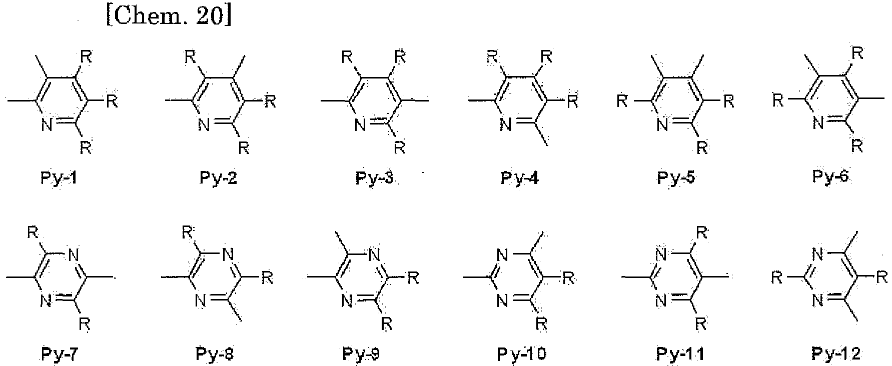

In the above formulae, R represents the same meaning as the above.

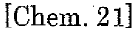

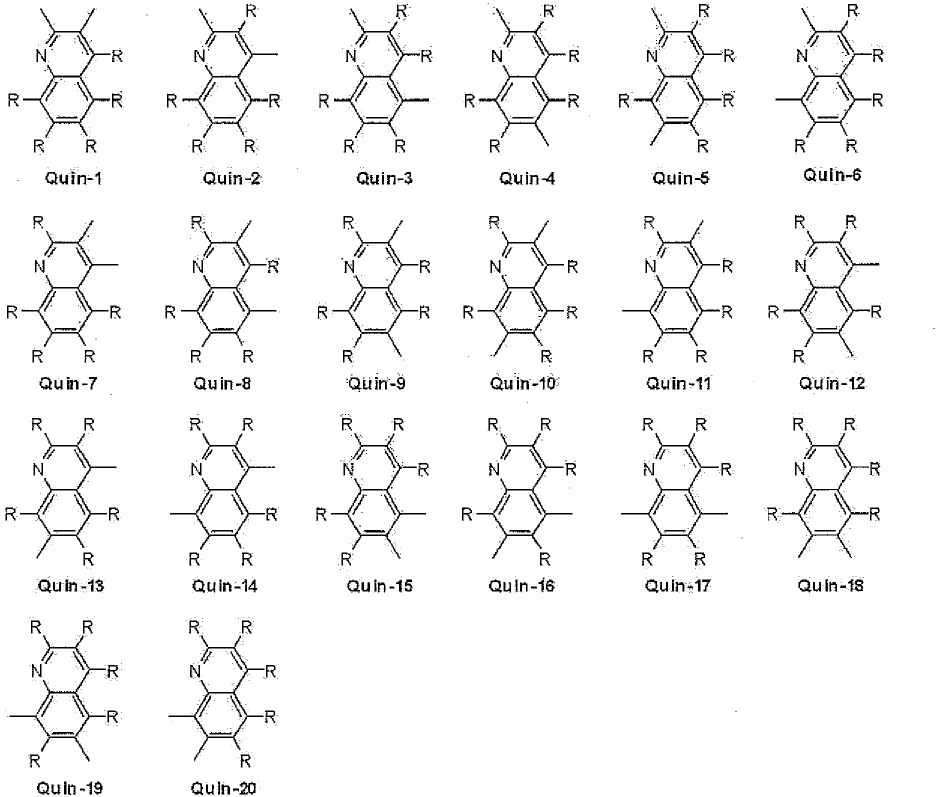

In the above formulae, R represents the same meaning as the above.

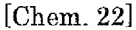

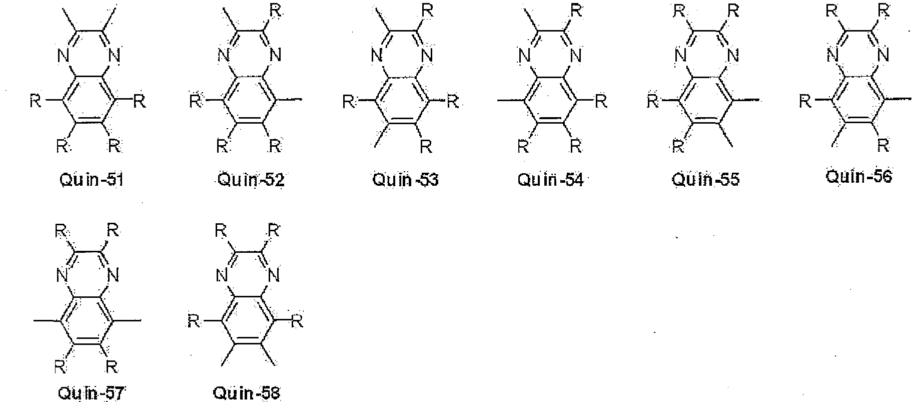

In the above formulae, R represents the same meaning as the above.

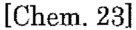

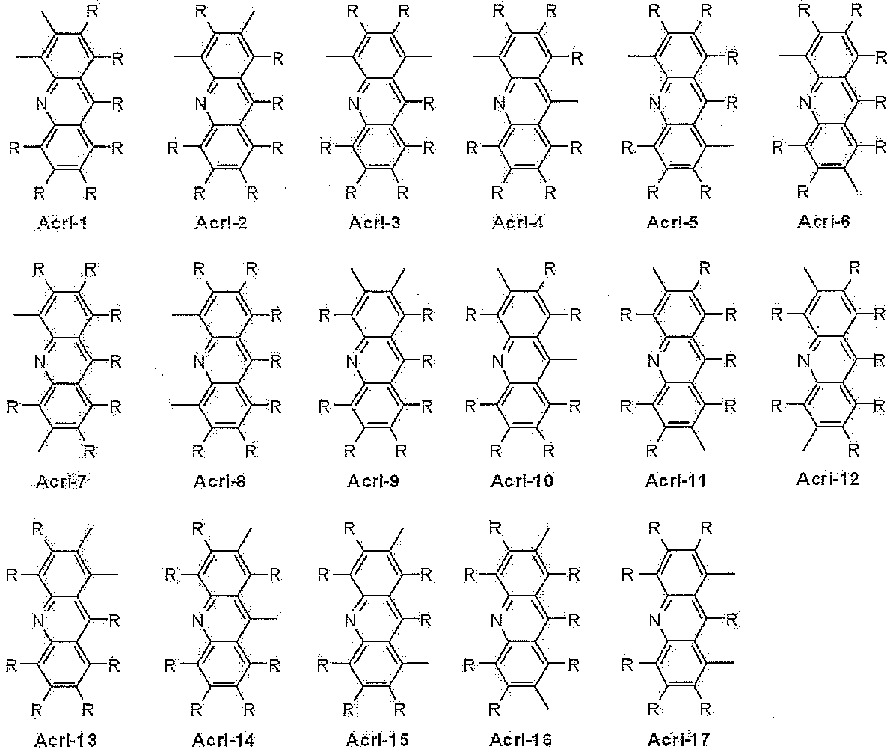

In the above formulae, R represents the same meaning as the above.

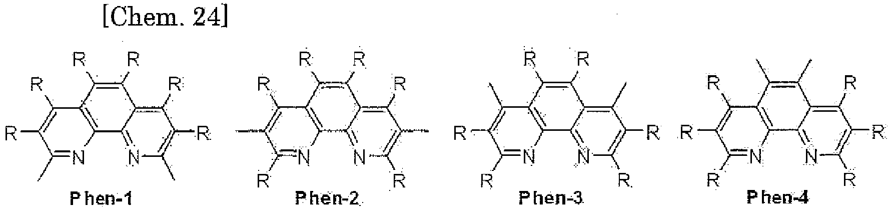

In the above formulae, R represents the same meaning as the above.

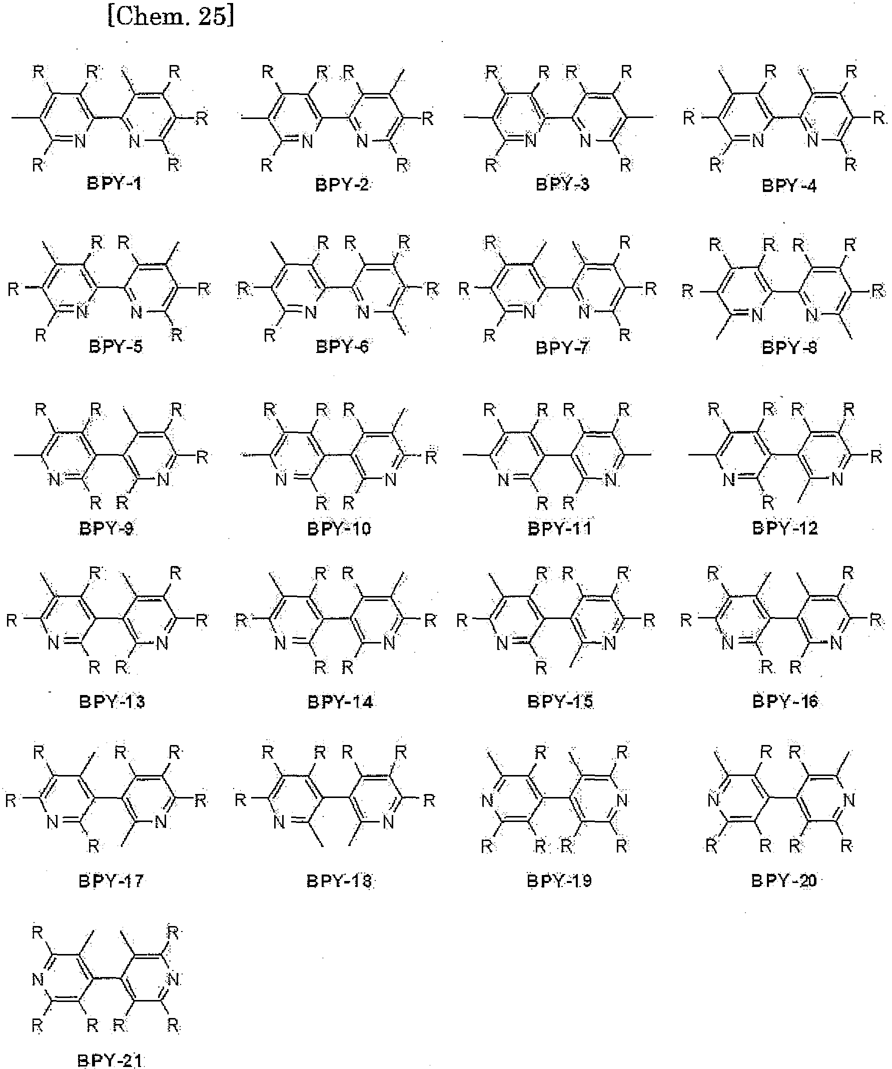

In the above formulae, R represents the same meaning as the above.

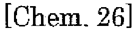

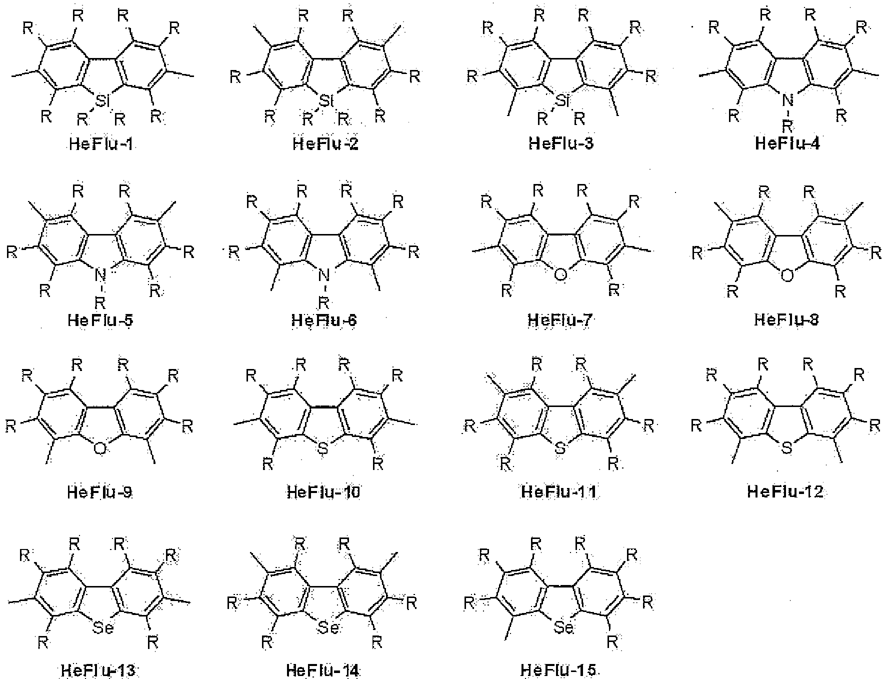

In the above formulae, R represents the same meaning as the above.

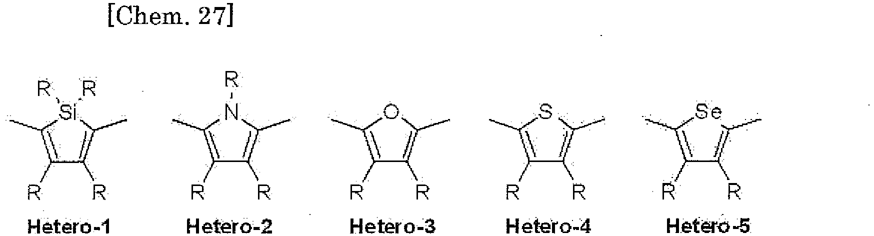

In the above formulae, R represents the same meaning as the above.

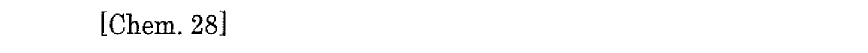

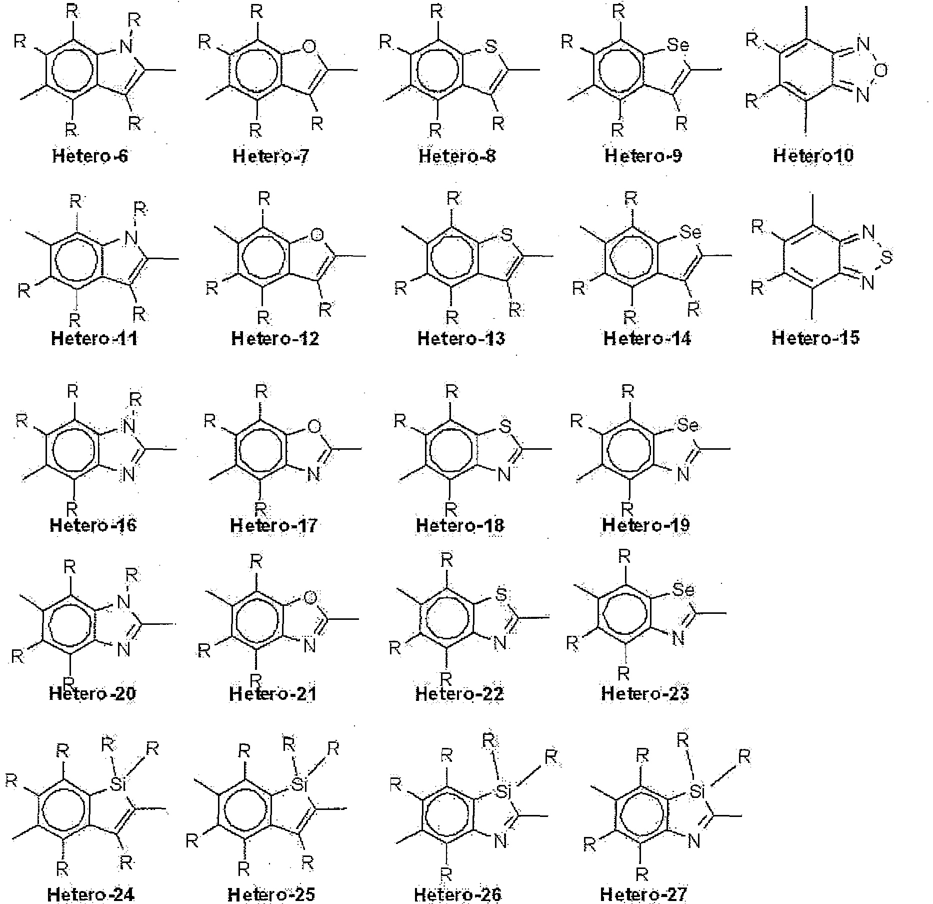

In the above formulae, R represents the same meaning as the above.

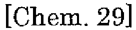

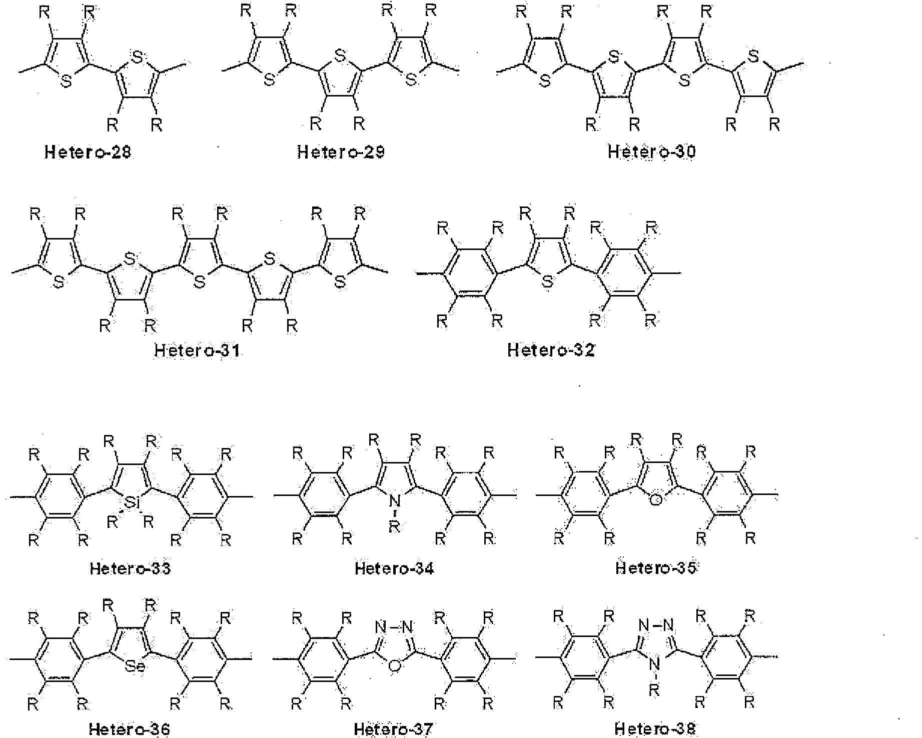

In the above formulae, R represents the same meaning as the above.

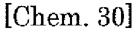

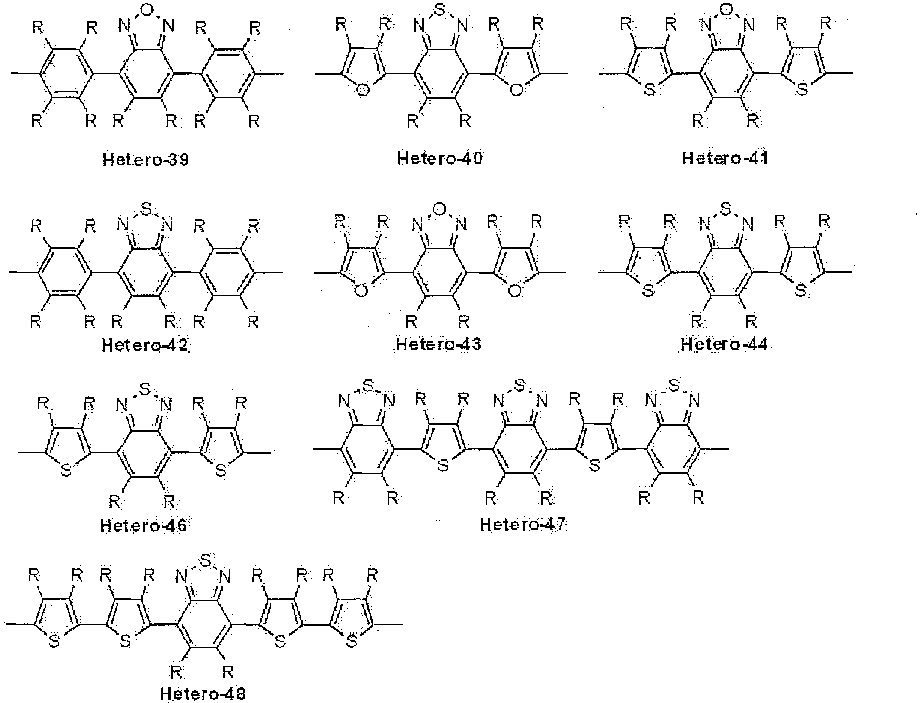

In the above formulae, R represents the same meaning as the above.

The divalent aromatic amine residue refers to a group of atoms left after two hydrogen atoms, which bond to carbon atoms constituting an aromatic ring, are removed from an aromatic amine, and means unsubstituted divalent aromatic amine residue and substituted divalent aromatic amine residue. As the substituent in the substituted divalent aromatic amine residue, without being particularly limited, specific examples of the substituent include a halogen group, an alkyl group, an alkoxy group, an alkylthio group, an aryl group, an aryloxy group, an arylthio group, an arylalkyl group, an arylalkoxy group, an arylalkylthio group, an arylalkenyl group, an arylalkynyl group, a monovalent heterocyclic group, a heterocyclic thio group, an amino group, a silyl group, an acyl group, an acyloxy group, an imine residue, an amide group, an acid imide group, a carboxyl group, a cyano group, a nitro group or the like. The number of carbon atoms of the divalent aromatic amine residue, excluding the number of carbon atoms of the substituent, is normally around 5 to 100, preferably 15 to 80, more preferably 15 to 60.

Examples of the divalent aromatic amine residue includes each of the groups represented by the formulae Am-1 to Am-12 as shown below:

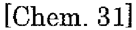

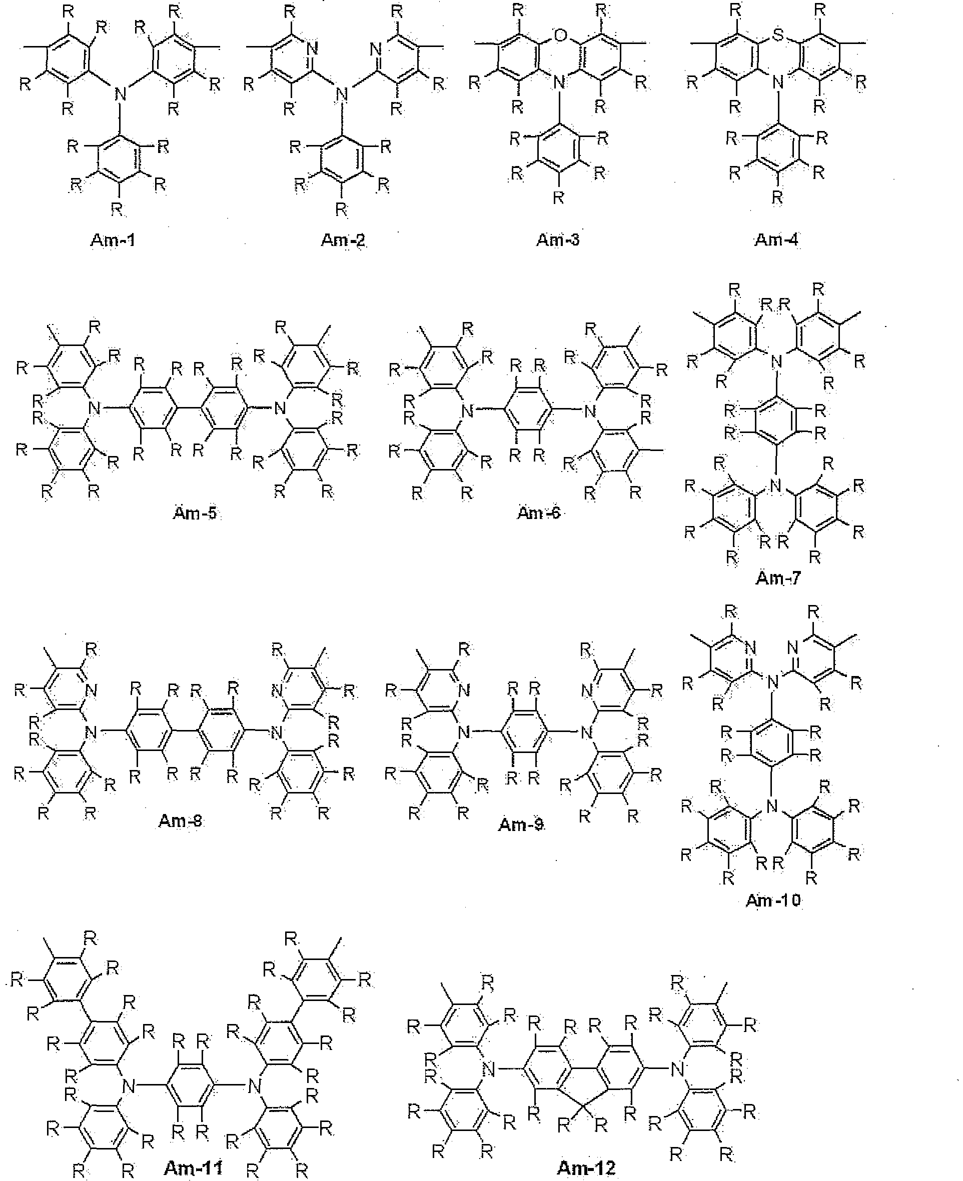

In the above formulae, R represents the same meaning as the above.

The divalent group resulting from the removal of two hydrogen atoms from a compound in which two aromatic rings are bound via a hydrocarbon group or a hetero atom refers to a divalent group, which is left after two hydrogen atoms are removed from a compound which has been formed by removing a hydrogen atom from each of two aromatic rings and by binding both the carbon atoms in the above two aromatic rings, from which the hydrogen atoms were removed, each other via a linking group such as a hydrocarbon group or a hetero atom. The formation process of the divalent group as mentioned above is described for the sake of convenience in order to express the structure of the above divalent group and the divalent group is not limited to those formed through the above process.

The structure of the linking group may be a structure of an hydrocarbon group alone or an hetero atom alone, or may be a structure in combination of one or more hydrocarbon groups with one or more hetero atoms.

The phrase "removing a hydrogen atom from an aromatic ring" means that a hydrogen atom bonding to a carbon atom, which constitutes an aromatic ring, is removed from the aromatic ring, and as a result of removal of the hydrogen atom, the aromatic ring becomes to an aryl group. Such an aryl group may be an unsubstituted aryl group or an aryl group wherein a hydrogen atom in the group is substituted with a halogen atom, an alkoxy group, an alkyl group, a carbonyl group, a carboxyl group or the like. The number of the substituent may be one or more and a plurality of substituents, if present, may be the same or different from each other. The aryl group includes an aryl group having a benzene ring, an aryl group having a fused ring, an aryl group wherein two or more independent benzene rings or fused rings are bound each other via a single bond or a divalent organic group or the like. The number of carbon atoms of the aryl group is normally around 6 to 60, preferably 6 to 48, more preferably 6 to 30. Example of the aryl group includes, for examples, a phenyl group, C₁-C₁₂ alkoxyphenyl group (C₁-C₁₂ means that the number of carbon atoms is 1 to 12, the same applies to the followings), bis(C₁-C₁₂ alkoxy)phenyl group, C₁-C₁₂ alkylphenyl group, bis(C₁-C₁₂ alkylphenyl)phenyl group, 1-naphthyl group, 2-naphthyl group, 1-anthracenyl group, 2-anthracenyl group, 9-anthracenyl group, tetrafluorophenyl group, and among them, a phenyl group, C₁-C₁₂ alkoxyphenyl group, bis(C₁-C₁₂ alkoxy)phenyl group, C₁-C₁₂ alkylphenyl group, bis(C₁-C₁₂ alkylphenyl)phenyl group are preferable.

Example of the structure in which two aromatic rings are bound via a hydrocarbon group or a hetero atom includes the structure as shown below and the structure made by combining two or more structures as shown below and the like. R is a group selected from the same substituent as mentioned in the above, Ar represents a hydrocarbon group having 6 to 60 carbon atoms.

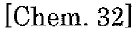

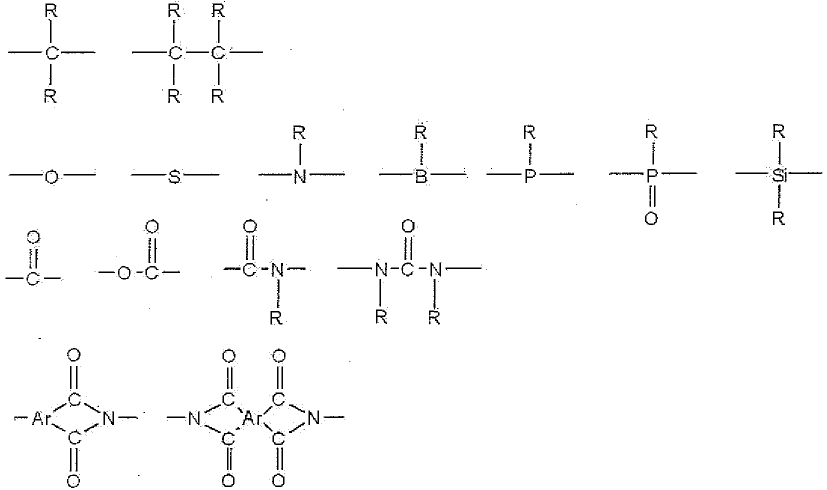

In the production method of the present invention, in addition to the first aromatic compound and the second aromatic compound, the other compound may be polymerized. Example of the other compound includes at least one compound selected from the group consisting of the compounds each represented by formulae (16) to (18).

[Chem. 33]

W¹-E-W¹ (16)

W²-E-W² (17)

W¹-E-W² (18)

In the above formulae, W¹ represents the first functional group including a boron atom, W² represents the second functional group, E represents a divalent group having a metal complex structure.

The divalent group having the metal complex structure refers to a divalent group left after two hydrogen atoms are removed from an organic ligand of a metal complex having the organic ligand.

The number of the carbon atoms of the organic ligand is normally around 4 to 60. Example of the organic ligand includes 8-quinolinol and derivatives thereof, benzoquinolinol and derivatives thereof, 2-phenyl-pyridine and the derivative thereof, 1-phenyl-isoquinoline and the derivative thereof, 2-phenyl-benzothiazole and the derivative thereof, 2-phenyl-benzoxazole and the derivative thereof, porphyrin and the derivative thereof and the like.

Example of the center metal of the complex includes, for example, aluminum, zinc, beryllium, iridium, platinum, gold, europium, terbium, ruthenium and the like.

The metal complex having an organic ligand includes a metal complex publicly known as the fluorescence material of low molecular weight or the phosphorescence material of low molecular weight, a triplet emission complex or the like.

The divalent group having the metal complex structure specifically includes the groups each represented by the following formulae (Metal-1 to Metal-8).

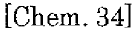

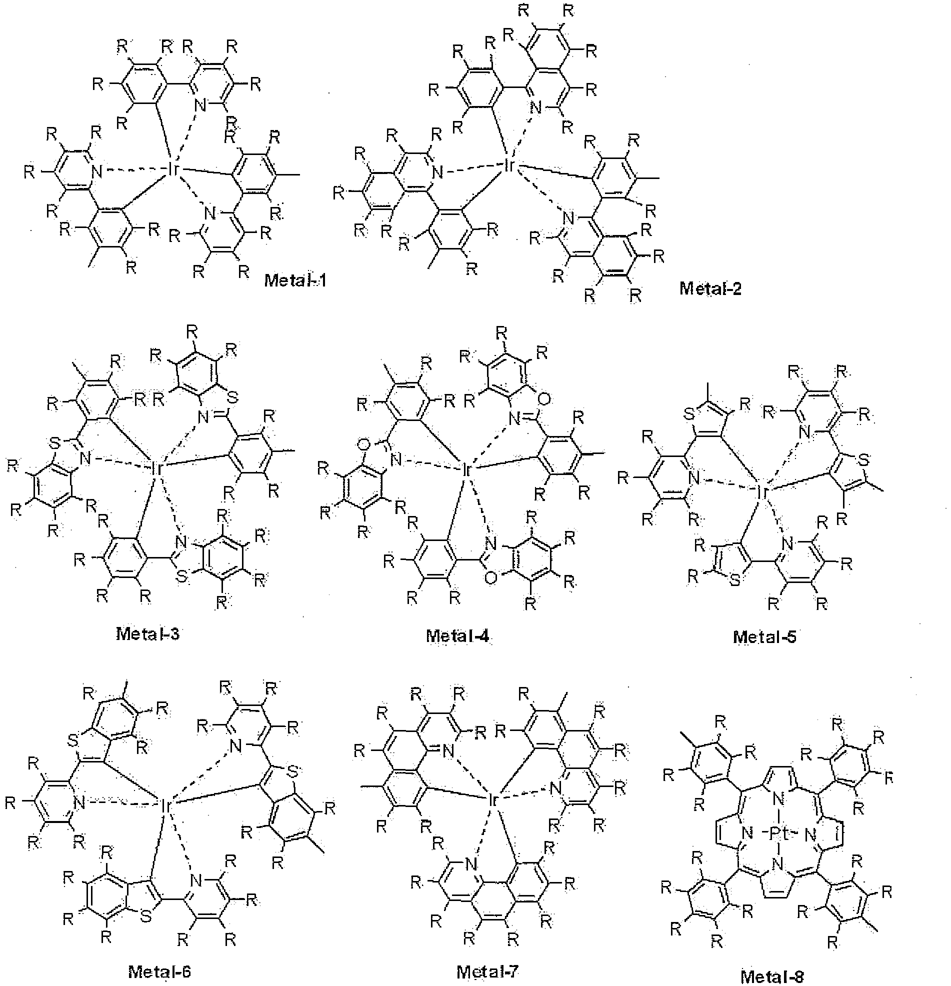

In the above formulae, R represents the same meaning as the above.

The production method of a polymer compound according to the present invention is preferable when a bulky aromatic compound is used as the first aromatic compound and the second aromatic compound. The term "bulky" means that the aromatic compound itself is a large molecule or that a large substituent is present at at least one of the space adjacent to the first functional group having a boron atom and the space adjacent to the second functional group.

The organic solvent used for the production method of a polymer compound according to the present invention includes an organic solvent which is capable of dissolving the first aromatic compound and the second aromatic compound, an organic solvent which is capable of dissolving the polymer produced from the polymerization reaction and the like. To such an organic solvent, water for dissolving a base may be added, if necessary.

The organic solvent to be used for the polymerization reaction includes a non-polar aromatic solvent, a polar oxygen-containing solvent, a polar nitrogen-containing solvent, a polar sulfur-containing solvent and the like. Specific examples of the organic solvent include benzene, toluene, xylene, mesitylene, 1,4-dioxane, tetrahydrofuran, ethylene glycol dimethyl ether, N,N-dimethylformamide, N,N-dimethyl acetamide, N-methyl-2-pyrrolidinone, dimethyl sulfoxide and the like. Preferably it is tetrahydrofuran, toluene. The organic solvents may be used in a mixture, and preferred combination of the organic solvents includes toluene and dimethyl sulfoxide, toluene and N-methyl-2-pyrrolidinone, toluene and ethylene glycol dimethyl ether, tetrahydrofuran and N-methyl-2-pyrrolidinone.

With respect to the amount of use of the organic solvent in the polymerization reaction, it is preferred in an amount of from 1 to 1000 times to total of the weight of the first aromatic compound and the weight of the second aromatic compound.

The organic solvent for dissolving the polymer compound produced from the polymerization reaction includes chloroform, methylene chloride, dichloroethane, tetrahydrofuran, 1,4-dioxane, ethylene glycol dimethyl ether, toluene, xylene, mesitylene, tetralin, decalin, anisole, n-butylbenzene, n-hexylbenzene and the like, which organic solvents may be used in combination with each other. The polymer compound can be usually dissolved in such solvents in an amount of 0.1% by weight or more, although the amount differs depending on the structure and molecular weight of the polymer compound.

The palladium complex used for the production method of a polymer compound of the present invention is generally used as a catalyst. Palladium complex comprising a phosphine may be used. When the palladium complex does not comprise a phosphine, a compound which functions as a ligand is added. The compound which functions as a ligand includes a phosphine compound.

The palladium complex to be used for the present invention includes palladium (0) complexes or palladium (II) salts.

The palladium complex preferably includes tetrakis(triphenylphosphine) palladium(0), tetrakis(methyldiphenylphosphine) palladium(0), tris(dibenzylidene acetone) dipalladium(0), tris(dibenzylideneacetone) dipalladium(0)-chloroform adduct, palladium(II) acetate or palladium(II) chloride,(bicyclo[2.2.1]hepta-2,5-diene)dichloropalladium(II), (2,2' -bipyridyl)dichloropalladium(II), bis(acetate)bis(triphenylphosphine)p alladium(II), bis(acetonitrile)chloronitrop alladium(II), bis(benzonitrile)dichloropalladium(II), bis(acetonitrile)dichloropalladium(II), bis[1,2-bis(diphenylphosphino)ethane]palladium(0), [1,2-bis(diphenylphosphino)ethane]dichloropalladium(II), trans-dibromobis(triphenylphosphine)palladium(II), dichloro(1,5-cyclooctadiene)palladium(II), dichloro(ethylenediamine)palladium(II), dichloro(N,N,N',N'-tetramethylenediamine)palladium(II), dichloro(1,10-phenanthroline)palladium(II), cis-dichlorobis(dimethylphenylphosphine)palladium(II), dichlorobis(methyldiphenylphosphine)palladium(II), dichlorobis(tricyclohexylphosphine)palladium(II), dichlorobis(triethylphosphine)palladium(II), dichlorobis(triphenylphosphine)palladium(II), dichlorobis(tri-o-tolylphosphine)palladium(II), palladium(II) acetylacetonate, palladium(II) bromide, palladium(II) hexafluoroacetylacetonate, palladium(II) iodide, palladium(II) nitrate,palladium(II) sulfate, palladium(II) trifluoroacetate, palladium(II) potassium bromide, palladium(II) potassium chloride, palladium(II) sodium chloride, tetraammine palladium(II) nitrate, tetrakis(acetonitrile)palladium(II) tetrafluoroborate or the like, and more preferably palladium(II) acetate.

The amount of use of the palladium complex to be used as the catalyst is preferably from 0.0001 to 0.1 mol, more preferably from 0.0005 to 0.05 mol, and further preferably from 0.001 to 0.03 mol based on 1 mol of the total of the first aromatic compound and the second aromatic compound. When the amount of use of the palladium complex is less than 0.0001 mol based on 1 mol of the total of the first aromatic compound and the second aromatic compound, the increasing effect of the molecular weight of the polymer compound could not be attained and when the amount of use exceeds 0.1 mol, no improved effect is recognized.

In a particularly preferred embodiment, the amount of use of the palladium complex is from 0.0003 to 0.01 mol, preferably from 0.0005 to 0.005 mol, and further preferably from 0.0008 to 0.003 mol based on 1 mol of the total of the first aromatic compound and the second aromatic compound.

When the palladium complex does not comprise a phosphine, it is preferable to add the following compound which functions as a ligand.

The compound which functions as a ligand includes a phosphine compound having an alkyl group, a phosphine compound having an aryl group, or a phosphine compound having both alkyl group and aryl group. The compound which functions as a ligand preferably includes triphenyl phosphine, tri-o-tolylphosphine, tri-m-tolylphosphine, tri-p-tolylphosphine, tris(pentafluorophenyl)phosphine, tris(p-fluorophenyl)phosphine, tris(o-methoxyphenyl)phosphine, tris(m-methoxyphenyl)phosphine, tris(p-methoxyphenyl)phosphine, tris(2,4,6-trimethoxyphenyl)phosphine, tri(m-chlorophenyl)phosphine, tri(p-chlorophenyl)phosphine, tricyclohexylphosphine, tri-tert-butylphosphine, tri-n-butylphosphine, tri-2-furylphosphine, 2-(dicyclohexylphosphino)biphenyl, 2-(di-tert-butylphosphino)biphenyl, 2-di-tert-butylphosphino-2'-methylbiphenyl, 2-(dicyclohexylphosphino-2',6'-dimethoxy-1,1'-biphenyl, 2-(dicyclohexylphosphino)-2'-(N,N.dimethylamino)biphenyl, 2-dicyclohexylphosphino-2'-methyl-biphenyl, 2-(dicyclohexylphosphino)-2',4',6'-tri-isopropyl-1,1'-biphenyl, and more preferably triphenyl phosphine, tri-o-tolylphosphine, tris(o-methoxyphenyl)phosphine.

The amount of use of the compound which functions as a ligand is, without being particularly limited, preferably from 0.0001 to 0.5 mol based on 1 mol of the total of the first aromatic compound and the second aromatic compound. When the amount of use of the compound which functions as a ligand is less than 0.0001 mol based on 1 mol of the total of the first aromatic compound and the second aromatic compound, the increasing effect of the molecular weight of the polymer compound could not be attained and when the amount of use exceeds 0.5 mol, no improved effect is recognized.

In a particularly preferred embodiment, the amount of use of the compound which functions as a ligand is 0.0003 to 0.02 mol, preferably 0.0005 to 0.01 mol, further preferably 0.001 to 0.008 mol based on 1 mol of the total of the first aromatic compound and the second aromatic compound.

The base to be used for the production method of a polymer compound of the present invention includes an inorganic base, an organic base and an inorganic salt. The base may optionally be used by dissolving in an organic solvent or water.

The base, for example, includes inorganic bases such as potassium carbonate, sodium carbonate, cesium carbonate and the like; organic bases such as tetraethyl ammonium hydroxide, bis(tetraethyl ammonium) carbonate, triethylamine and the like; and inorganic salts such as cesium fluoride and the like. The base may optionally be used by dissolving in an organic solvent or water. For example, potassium carbonate, sodium carbonate, tetraethyl ammonium hydroxide, bis(tetraethyl ammonium) carbonate can be used in the form of an aqueous solution. The amount of use of the base in the polymerization reaction is preferably from 0.1 to 50 mol, more preferably from 1 to 20 mol based on 1 mol of the total of the first aromatic compound and the second aromatic compound.

In the production method of a polymer compound of the present invention, the polymerization may be performed in the presence of a phase transfer catalyst. Among them, under a condition where an inorganic salt is used as an aqueous solution and the reaction system has two layers comprising an organic solvent layer and an aqueous solution layer, it is preferable that the phase transfer catalyst is used.

The phase transfer catalyst includes tetraalkyl ammonium halides. The kind and the amount of the tetraalkyl ammonium halides are appropriately selected depending on the first aromatic compound, the second aromatic compound, the kind of the solvent, and the amount of the solvent to be used. When the phase transfer catalyst is used, it is preferable that the amount of use is preferably from 0.1 to 20 mol based on 1 mol of the total of the first aromatic compound and the second aromatic compound.

The tetraalkyl ammonium halide may be a single substance or a mixture of different kinds of tetraalkyl ammonium halides.

In the tetraalkyl ammonium halides, the alkyl group includes methyl group, ethyl group, isopropyl group, n-propyl group, tert-butyl group, n-butyl group, n-pentyl group, n-hexyl group, n-heptyl group or n-octyl group. The halogen in the tetraalkyl ammonium halides includes fluorine, chlorine, bromine or iodine.

Specific examples of the tetraalkyl ammonium halides include tetramethylammonium fluoride, tetraethylammonium fluoride, tetra-n-butylammonium fluoride, tetra-tert-butylammonium fluoride, tetramethylammonium chloride, tetraethylammonium chloride, tetra-n-butylammonium chloride, tetra-tert-butylammonium chloride, tetramethylammonium bromide, tetraethylammonium bromide, tetra-n-butylammonium bromide, tetra-tert-butylammonium bromide, tetramethylammonium iodide, tetraethylammonium iodide, tetra-n-butylammonium iodide, tetra-tert-butylammonium iodide, tetra-n-pentylammonium fluoride, tetra-n-pentylammonium chloride, tetra-n-pentylammonium bromide, tetra-n-pentylammonium iodide, tetra-n-hexylammonium fluoride, tetra-n-hexylammonium chloride, tetra-n-hexylammonium bromide, tetra-n-hexylammonium iodide, tetxa-n-heptylammonium fluoride, tetra-n-heptylammonium chloride, tetra-n-heptylammonium bromide, tetra-n-heptylammonium iodide, tetra-n-octylammonium fluoride, tetra-n-octylammonium chloride, tetra-n-octylammonium bromide, tetra-n-octylammonium iodide, tri-n-octylmethylammonium chloride.

According to the production method of a polymer compound of the present invention, a polymer compound having a repeating unit represented by formula (2) is produced from the first aromatic compound and the second aromatic compound.

[Chem. 35]

-Ar- (2)

In the above formula, Ar represents a divalent group resulting from the removal of two hydrogen atoms from an aromatic compound. That is, Ar is a residue of the first aromatic compound or a residue of the second aromatic compound.

A second embodiment of the production method of a polymer compound of the present invention resides in a method for producing a polymer compound having a repeating unit represented by formula (2) by polymerizing an aromatic compound having a first functional group containing a boron atom and a second functional group which is capable of reacting with the first functional group in the presence of an organic solvent, a palladium complex, a base and a compound represented by formula (1).

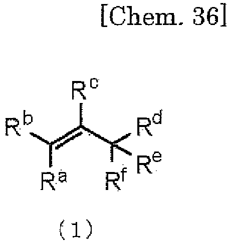

In the above formula, R^{a}, R^{b}, R^{c}, R^{d}, R^{e} and R^{f} are the same or different, and each represents a hydrogen atom or a monovalent organic group, or any two of R^{a} to R^{f} are bound with each other to form a non-aromatic ring, and the remainder are the same or different, and each represents a hydrogen atom or a monovalent organic group.

[Chem.37]

-Ar- (2)

In the above formula, Ar represents a divalent group resulting from the removal of two hydrogen atoms from an aromatic compound.

Specific examples of the compound represented by formula (1) which is used in the second embodiment of the production method of a polymer compound of the present invention include the same compounds as represented by formula (1) which are used in the first embodiment.

The amount of use of the compound represented by formula (1) which is used in the production method of the present invention is preferably from 0.0001 to 20 mol based on 1 mol of the above-mentioned aromatic compound, more preferably 0.0005 to 20 mol, further preferably 0.001 to 10 mol. When the amount of use of the compound represented by formula (1) is less than 0.0001 mol based on 1 mol of the above-mentioned aromatic compound, the increasing effect of the molecular weight of the polymer compound could not be attained and when the amount of use exceeds 20 mol, no improved effect is recognized.

In a particularly preferred embodiment, the amount of use of the compound represented by formula (1) is from 0.01 to 1 mol, preferably 0.03 to 0.5 mol, further preferably 0.05 to 0.3 mol based on 1 mol of the above-mentioned aromatic compound.

Examples of the aromatic compound to be used for the production method in the present invention include at least one compounds selected from the group consisting of the compounds each represented by formulae (11) to (14).

[Chem. 38]

W¹-A-W² (11)

W¹-B-W² (12)

W¹-C-W² (13)

W¹-D-W² (14)

In the above formulae, W¹ represents the first functional group containing a boron atom, W² represents the second functional group, A represents an arylene group, B represents a divalent heterocyclic residue having aromaticity, C represents a divalent aromatic amine residue, D represents a divalent group resulting from the removal of two hydrogen atoms from a compound in which two aromatic rings are bound via a hydrocarbon group or a hetero atom.

The definition and the specific examples of the first functional group containing a boron atom, the second functional group, the arylene group, the divalent heterocyclic residue having aromaticity, the divalent aromatic amine residue, the divalent group resulting from the removal of two hydrogen atoms from the compound in which two aromatic rings are bound via a hydrocarbon group or a hetero atom are the same as the definition and the specific examples of the first functional group containing a boron atom, the second functional group, the arylene group, the divalent heterocyclic residue having aromaticity, the divalent aromatic amine residue, the divalent group resulting from the removal of two hydrogen atoms from the compound in which two aromatic rings are bound via a hydrocarbon group or a hetero atom that were mentioned above.

In the production method of the present invention, in addition to the aromatic compound, the other compounds may be polymerized. The other compounds include a compound represented by each of formulae (16) to (18).

The production method of a polymer compound according to the present invention is preferable when a bulky aromatic compound is used as the aromatic compound. The term "bulky" means that the aromatic compound itself is a large molecule or that a large substituent is present at least one of the space adjacent to the first functional group having a boron atom and the space adjacent to the second functional group.

Specific examples of the organic solvent used in the second embodiment of the production method of a polymer compound of the present invention include the same organic solvents as that used in the first embodiment. The amount of use of the organic solvent is preferably from 1 to 1000 times by weight to the aromatic compound.

Specific examples of the palladium complex used in the second embodiment of the production method of a polymer compound of the present invention include the same organic solvents as that used in the first embodiment.

The amount of use of the palladium complex used as the catalyst is preferably from 0.00001 to 0.1 mol, more preferably 0.00005 to 0.05 mol, further preferably 0.0001 to 0.03 mol based on 1 mol of the above-mentioned aromatic compound. When the amount of use of the palladium complex is less than 0.00001 mol based on 1 mol of the above-mentioned aromatic compound, the increasing effect of the molecular weight of the polymer compound could not be attained and when the amount of use exceeds 0.1 mol, no improved effect is recognized.

When the palladium complex does not comprise a phosphine, it is preferable that a compound which functions as a ligand is added.

The amount of use of the compound which functions as a ligand is, without being particularly limited, preferably from 0.0001 to 0.5 mol based on 1 mol of the above-mentioned aromatic compound. When the amount of use of the compound which functions as a ligand is less than 0.0001 mol based on 1 mol of the above-mentioned aromatic compound, the increasing effect of the molecular weight of the polymer compound could not be attained and when the amount of use exceeds 0.5 mol, no improved effect is recognized.

In a particularly preferred embodiment, the amount of use of the compound which functions as a ligand is from 0.0003 to 0.02 mol, preferably 0.0005 to 0.01 mol, further preferably 0.001 to 0.008 mol based on 1 mol of the above-mentioned aromatic compound.

Specific examples of the base used in the second embodiment of the production method of a polymer compound of the present invention include the same bases as that used in the first embodiment. The amount of use of the base is preferably from 0.1 to 50 mol, more preferably 1 to 20 mol based on 1 mol of the above-mentioned aromatic compound.

In the second embodiment of the production method of a polymer compound of the present invention, the polymerization may be performed in the presence of a phase transfer catalyst. Specific examples of the phase transfer catalyst include the same phase transfer catalysts as used in the first embodiment. When the phase transfer catalysts are used, the amount of use is preferably from 0.1 to 20 mol based on 1 mol of the above-mentioned aromatic compound.

According to the production method of a polymer compound of the present invention, a polymer compound having a repeating unit represented by formula (2) is produced from the above-mentioned aromatic compound.

[Chem. 39]

-Ar- (2)

In the above formula, Ar represents a divalent group resulting from the removal of two hydrogen atoms from an aromatic compound. That is, Ar represents a residue of the above-mentioned aromatic compound.

In the production method of a polymer compound of the present invention, a preferred embodiment includes a production method in which the K/J, a ratio of the total amount of the first functional group having a boron atom by mol (J) and the total amount of the second functional group by mol (K), is substantially 1 (usually in the range from 0.6 to 1.4, preferably from 0,9 to 1.1).

The organic solvent to be used for the production method of a polymer compound of the present invention, although it varies depending on the organic solvent used, is preferably subjected to a sufficient deoxidation treatment before the polymerization in order to generally inhibit side reactions. The polymerization reaction is preferably performed under an inactive atmosphere such as argon or nitrogen. In addition, when the base is in an aqueous solution, the aqueous solution is preferably subjected to a deoxidation treatment.

As the method of addition of a base, a palladium complex which is the catalyst or a ligand to the reaction system, it is recited a method in which a solution prepared by dissolving the aromatic compound in the organic solvent is added to a solution of a base or a palladium complex which is the catalyst or a ligand while being stirred in an inactive atmosphere such as argon or nitrogen. As another method, it is recited a method in which a solution of a base, a palladium complex which is the catalyst or a ligand is added to a solution prepared by dissolving the aromatic compound while being stirred under an inactive atmosphere such as argon or nitrogen.

The polymerization according to the production method of the present invention can be performed at a temperature of not less than the melting point and of not more than the boiling point of the organic solvent. The reaction temperature is usually from room temperature (25°C) to 250°C, preferably 50 to 200°C, more preferably 80 to 150°C.

The reaction time of the method of the present invention is preferably not more than 96 hours, more preferably not more than 24 hours. In a particularly preferred embodiment, the reaction time of the method of the present invention is not more than 12 hours, more preferably 0.3 to 8 hours, further preferably 0.5 to 4 hours.

In the present invention, a polystyrene referenced number-average molecular weight and a polystyrene referenced weight-average molecular weight may be measured by using a size exclusion chromatography (SEC).

The method of the present invention is a method which is excellent in the polymerization efficiency defined by the time required for polymerization and the molecular weight of the polymer compound obtained from the polymerization. The molecular weight of the polymer compound produced according to the present method itself is not particularly limited, and the method may be applied, for example, to the production of a polymer compound having not so high molecular weight. However, the present method is particularly useful when it is suitably applied to the production of a polymer compound having a polystyrene referenced weight-average molecular weight of more than 1.5×10⁵, particularly to the production of a polymer compound having a polystyrene referenced weight-average molecular weight of from 2.0×10⁵ to 3.0×10⁶.

### EXAMPLES

Hereinafter, the present invention will be described in more detail by way of examples and comparative examples, but the present invention is not limited to the examples.

The polystyrene referenced number-average molecular weight and the polystyrene referenced weight-average molecular weight of the polymer compound were measured by a size exclusion chromatography (SEC) (LC-10 Avp, manufactured by Shimadzu Corporation). As an analysis condition of the SEC, the following analysis conditions were used.

### [Analysis Condition]

The polymer compound to be measured was dissolved in tetrahydrofuran so as to give a concentration of about 0.05% by weight, and the solution was injected in an amount of 30 µL into SEC. Tetrahydrofuran was used as the mobile phase of SEC, and allowed to flow at a flow rate of 1.0 mL/min. As the column, a single column of Rapide M (manufactured by Polymer Laboratories Ltd.) was used. An UV/VIS photodiode array detector (SRD-M10Avp, manufactured by Shimadzu Corp.) was used as a detector. The detection wavelength was set at 258nm.

In Examples 1 and 2, the following polymerization reaction was performed. Examples 1 and 2 are the polymerization reaction in the presence of the compound represented by formula (1). Each numeral within the parenthesis in the Figure indicates % by mol of each compound used for the polymerization.

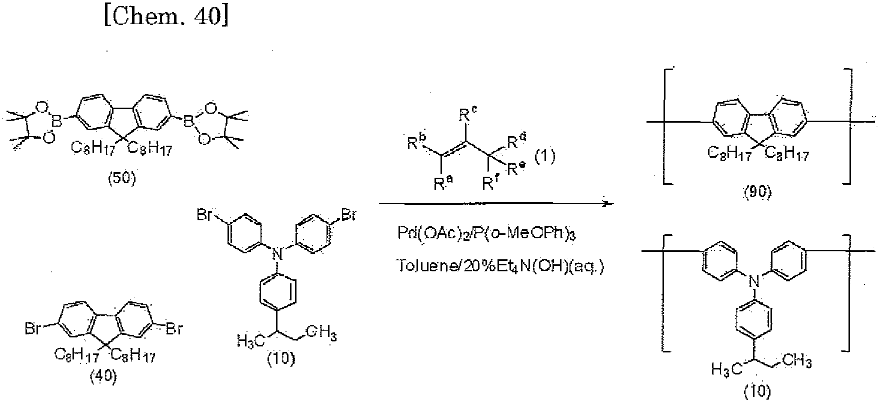

### Example 1

### (Polymerization in the presence of 1-hexene)

To a glass reaction vessel equipped with a cooling means, 0.6515g (1.0mmol) of 9,9-dioctylfluorene-2,7-diboronic acid bis(pinacol) ester, 0.4449g (0.8mmol) of 2,7-dibromo-9,9-dioctylfluorene, 0.0931g (0.2mmol) of N,N-bis(4-bromophenyl)-4-sec-butyl aniline, 20mL of toluene were added to form a monomer solution. Under nitrogen gas atmosphere, the monomer solution was heated at 100°C, and 0.5mg of palladium acetate, 2.9mg of tris(2-methoxyphenyl)phosphine, 13.7mg of 1-hexene which is a compound represented by formula (1), 3.4mL of a 20% by weight of tetraethylammonium hydroxide aqueous solution were added thereto. The solution was stirred at 100 °C and polymerized for 1 hour to obtain a polymer compound, which had a polystyrene referenced number-average molecular weight of 1.1×10⁵ and a polystyrene referenced weight-average molecular weight of 3.2×10⁵.

### Example 2

### (Polymerization in the presence of ((R)-(+)-limonene)

To a glass reaction vessel equipped with a cooling means, 0.6515g (1.0mmol) of 9,9-dioctylfluorene-2,7-diboronic acid bis(pinacol) ester, 0.4449g (0.8mmol) of 2,7-dibromo-9,9-dioctylfluorene, 0.0931g (0.2mmol) of N,N-bis(4-bromophenyl)-4-sec-butyl aniline, 20mL of toluene were added to form a monomer solution. Under nitrogen gas atmosphere, the monomer solution was heated at 100°C, and 0.5mg of palladium acetate, 2.9 mg of tris(2-methoxyphenyl)phosphine, 44.2 mg of (R)-(+)-limonene which is a compound represented by formula (1), 3.4 mL of a 20% by weight of tetraethylammonium hydroxide aqueous solution were added thereto. The solution was stirred at 100 °C and polymerized for 1 hour to obtain a polymer compound, which had a polystyrene referenced number-average molecular weight of 8.5×10⁴ and a polystyrene referenced weight-average molecular weight af 2.4×10⁵.

### Comparative Example 1

### (The compound of formula (1) being omitted)

To a glass reaction vessel equipped with a cooling means, 0.6515g (1.0mmol) of 9,9-dioctylfluorene-2,7-diboronic acid bis(pinacol) ester, 0.4449g (0.8mmol) of 2,7-dibromo-9,9-dioctylfluorene, 0.0931g (0.2mmol) of N,N-bis(4-bromophenyl)-4-sec-butyl aniline, 20mL of toluene were added to form a monomer solution. Under nitrogen gas atmosphere, the monomer solution was heated at 100°C, and 0.5mg of palladium acetate, 2.9 mg of tris(2-methoxyphenyl)phosphine, 3.4 mL of a 20% by weight of tetraethylammonium hydroxide aqueous solution were added thereto. The solution was stirred at 100 °C and polymerized for 1 hour to obtain a polymer compound, which had a polystyrene referenced number-average molecular weight of 6.0×10⁴ and a polystyrene referenced weight-average molecular weight of 1,5×10⁵.

## Claims

1. A method for producing a polymer compound having a repeating unit represented by formula (2), the method comprising a step of polymerizing a first aromatic compound having at least two first functional groups each containing a boron atom with a second aromatic compound having at least two second functional groups which are capable of reacting with the first functional group, in the presence of an organic solvent, a palladium complex, a base and a compound represented by formula (1): 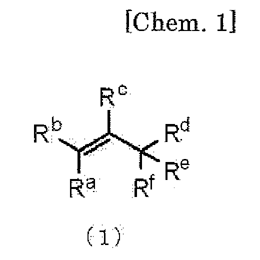 wherein R^{a}, R^{b}, R^{c}, R^{d}, R^{e} and R^{f} are the same or different, and each represents a hydrogen atom or a monovalent organic group, or any two of R^{a} to R^{f} are bound with each other to form a non-aromatic ring, and the remainder are the same or different, and each represents a hydrogen atom or a monovalent organic group;
[Chem. 2]
-Ar- (2)
wherein Ar represents a divalent group resulting from the removal of two hydrogen atoms from an aromatic compound.

2. The method for producing a polymer compound according to claim 1, wherein the first aromatic compound is at least one compound selected from the group consisting of compounds represented by formulae (3) to (6) and the second aromatic compound is at least one compound selected from the group consisting of compounds represented by formulae (7) to (10).
[Chem. 3]
W¹-A-W¹ (3)
W¹-B-W¹ (4)
W¹-C-W¹ (5)
W¹-D-W¹ (6)
W²-A-W² (7)
W²-B-W² (8)
W²-C-W² (9)
W²-D-W² (10)
wherein W¹ represents the first functional group containing a boron atom, W² represents the second functional group, A represents an arylene group, B represents a divalent heterocyclic residue having aromaticity, C represents a divalent aromatic amine residue, D represents a divalent group resulting from the removal of two hydrogen atoms from a compound in which two aromatic rings are bound via a hydrocarbon group or a hetero atom.

3. A method for producing a polymer compound having a repeating unit represented by formula (2), the method comprising a step of polymerizing an aromatic compound having a first functional group containing a boron atom and a second functional group which is capable of reacting with the first functional group in the presence of an organic solvent, a palladium complex, a base and a compound represented by formula (1): 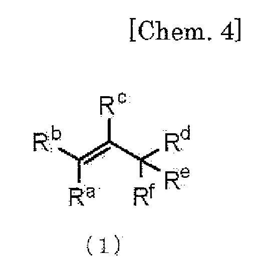 wherein R^{a}, R^{b}, R^{c}, R^{d}, R^{e} and R^{f} are the same or different, and each represents a hydrogen atom or a monovalent organic group, or any two of R^{a} to R^{f} are bound with each other to form a non-aromatic ring, and the remainder are the same or different, and each represents a hydrogen atom or a monovalent organic group;
[Chem.5]
-Ar- (2)
wherein Ar represents a divalent group resulting from the removal of two hydrogen atoms from an aromatic compound.

4. The method for producing a polymer compound according to claim 3, wherein the aromatic compound is at least one compound selected from the group consisting of compounds represented by formulae (11) to (14).
[Chem. 6]
W¹-A-W² (11)
W¹-B-W² (12)
W¹-C-W² (13)
W¹-D-W² (14)
wherein W¹ represents the first functional group containing a boron atom, W² represents the second functional group, A represents an arylene group, B represents a divalent heterocyclic residue having aromaticity, C represents a divalent aromatic amine residue, D represents a divalent group resulting from the removal of two hydrogen atoms from a compound in which two aromatic rings are bound via a hydrocarbon group or a hetero atom.

5. The method for producing a polymer compound according to any one of claims 1 to 4, wherein R^{d} is a hydrogen atom.

6. The method for producing a polymer compound according to any one of claims 1 to 5, wherein R^{a} and R^{b} are each hydrogen atoms.

7. The method for producing a polymer compound according to any one of claims 1 to 6, wherein R^{a}, R^{b} and R^{d} are each hydrogen atoms.

8. The method for producing a polymer compound according to any one of claims 1 to 7, wherein the compound represented by formula (1) is a hydrocarbon compound or a compound consisting of carbon atoms, hydrogen atoms and oxygen atoms.

9. The method for producing a polymer compound according to claim 8, wherein the compound represented by formula (1) is a hydrocarbon compound.

10. The method for producing a polymer compound according to any one of claims 1 to 9, wherein the compound represented by formula (1) is an aliphatic compound.

11. The method for producing a polymer compound according to claim 10, wherein R^{a}, R^{b}, R^{c}, R^{d} and R^{f} are each hydrogen atoms and R^{e} is an alkyl group having 3 to 12 carbon atoms.

12. The method for producing a polymer compound according to claim 10, wherein the compound represented by formula (1) is the compound represented by formula (15): 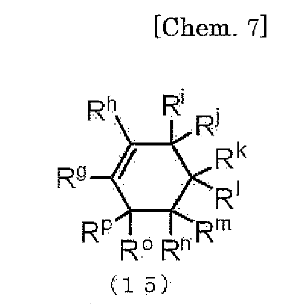 wherein R^{g} to R^{p} are the same or different, and each represents a hydrogen atom or an aliphatic hydrocarbon group.

13. The method for producing a polymer compound according to any one of claims 1 to 12, wherein the compound represented by formula (1) has a boiling point of not less than 40 °C at 1 atm.

14. The method for producing a polymer compound according to any one of claims 1 to 13, wherein the amount of the compound represented by formula (1) is from 0.1 to 1000 mol based on 1 mol of palladium complex.

15. The method for producing a polymer compound according to claim 1 or 2, wherein the amount of the compound represented by formula (1) is from 0.0001 to 20 mol based on 1 mol of the total of the first aromatic compound and the second aromatic compound.

16. The method for producing a polymer compound according to claim 3 or 4, wherein the amount of the compound represented by formula (1) is from 0.0001 to 20 mol based on 1 mol of the aromatic compound.
